(19) Europäisches Patentamt
European Patent Office
Office européen des brevets

(11) EP 4 079 819 B1

(12) EUROPEAN PATENT SPECIFICATION

(45) Date of publication and mention of the grant of the patent:
**22.07.2026 Bulletin 2026/30**

(21) Application number: **22168569.6**

(22) Date of filing: **14.04.2022**

(51) International Patent Classification (IPC):
***C09D 11/322*** *(2014.01)* ***C09D 11/38*** *(2014.01)*
***C09D 11/40*** *(2014.01)*

(52) Cooperative Patent Classification (CPC):
**C09D 11/322; C09D 11/38; C09D 11/40**

# (54) INK, INK SET, INKJET PRINTING DEVICE, AND PRINTING METHOD

TINTE, TINTENSATZ, TINTENSTRAHLDRUCKVORRICHTUNG UND DRUCKVERFAHREN

ENCRE, JEU D'ENCRE, DISPOSITIF D'IMPRESSION À JET D'ENCRE, ET PROCÉDÉ D'IMPRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2021 JP 2021072881**
**28.02.2022 JP 2022029792**

(43) Date of publication of application:
**26.10.2022 Bulletin 2022/43**

(73) Proprietor: **Ricoh Company, Ltd.**
**Tokyo 143-8555 (JP)**

(72) Inventors:
- **KATSURAGI, Koji**
  **Kanagawa-ken, 243-0460 (JP)**
- **SUGAWARA, Takashi**
  **Kanagawa-ken, 243-0460 (JP)**
- **SAITOH, Haruki**
  **Kanagawa-ken, 243-0460 (JP)**

(74) Representative: **Marks & Clerk LLP**
**15 Fetter Lane**
**London EC4A 1BW (GB)**

(56) References cited:
**US-A1- 2013 063 524** **US-A1- 2013 258 007**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 079 819 B1

## Description

BACKGROUND

Technical Field

The present disclosure relates to an ink, an ink set, an inkjet printing device, and a printing method.

Description of the Related Art

Ink containing an acetylene-based or silicone-based surfactant, an anionic resin having an acid value of 50 or greater, and a styrene acrylic resin emulsion has been proposed in Unexamined Japanese Patent Application Publication No. 2016-222754 to strike a balance between the gloss and abrasion resistance.

Ink containing an acetylene-based or silicone-based surfactant and an organic solvent having a particular surface tension at 25 degrees C and a particular HLB value has been proposed in Unexamined Japanese Patent Application Publication No. 2018-115325 to strike a balance between the image quality and discharging stability.

Ink containing glycerin, 1,3-butanediol, and 3-methyl-1,3-butanediol with a particular proportion has been proposed in Unexamined Japanese Patent Application Publication No. 2013-203910 to prevent blurring and enhance discharging stability.

US 2013/258007 A1 discloses an ink containing a surfactant, a polyether-modified silicone oil, a dispersing agent, glycerin as a first water-soluble organic solvent, and dipropylene glycol, 1,3-butanediol, 3-methyl-1,3-butanediol, 1,5-pentanediol or 1,6-hexanadiol, as a second water-soluble organic solvent, wherein the mass ratio of the first water-soluble organic solvent : the second water-soluble organic solvent is 1:0.75 to 1:2.25.

US 2013/063524 A1 discloses an ink containing a colorant, water, and a water soluble organic solvent, wherein the colorant contains a carbon black partially coated with a resin, and wherein the ink meets the following expressions (1) and (2):

$$1.0\times104 < N\times R/100 < 1.0\times106 \qquad (1)$$

$$20.0 < R \leqq 100.0 \qquad (2)$$

where R (% by mass) denotes a rate of the mass of the carbon black partially coated with a resin relative to the mass of the colorant, and N denotes the number of coarse particles having a particle diameter of 0.5 μm or more per 5 μL of the ink.

SUMMARY

According to the present disclosure, an ink is provided which prevents liquid separation in the ink and strikes a balance between the discharging stability and storage stability.

According to embodiments of the present disclosure, an ink is provided which contains a coloring material, a water-soluble organic solvent, a compound represented by Chemical Formula 1 or Chemical Formula 2 below, a surfactant containing a first silicone-based compound having an HLB value of from 7.0 to 9.0 and a second silicone-based compound having an HLB value of from 14.0 to 18.0, and water,

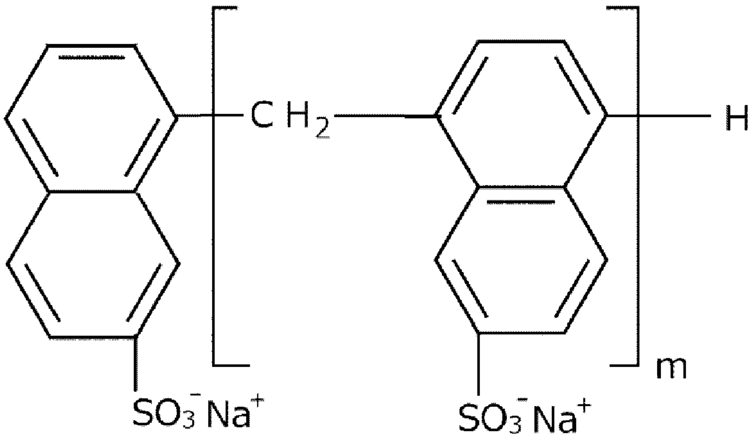

Chemical Formula 1

where m represents an integer of from 1 to 4,

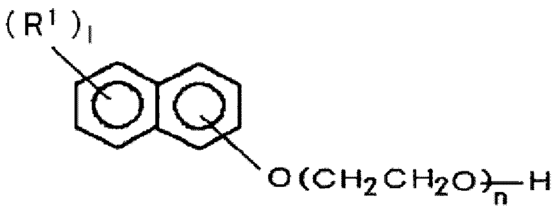

Chemical Formula 2

where $R^1$ represents alkyl having 1 to 20 carbon atoms, or aralkyl having 7 or 8 carbon atoms, l represents 0 or an integer of from 1 to 7, and n represents an integer of from 20 to 200.

As another aspect of embodiments of the present disclosure, an ink set is provided which contains:

black ink comprising carbon black;
cyan ink comprising Pigment Blue 15:3;
magenta ink comprising Pigment Red 122; and
yellow ink comprising Pigment Yellow 74;
wherein each of the black ink, cyan ink, magenta ink, and yellow ink comprises:

a water-soluble organic solvent;
a compound represented by the following Chemical Formula 1 or Chemical Formula 2;
a surfactant comprising a first silicone-based compound having an HLB value of from 7.0 to 9.0 and a second silicone-based compound having an HLB value of from 14.0 to 18.0; and
water,

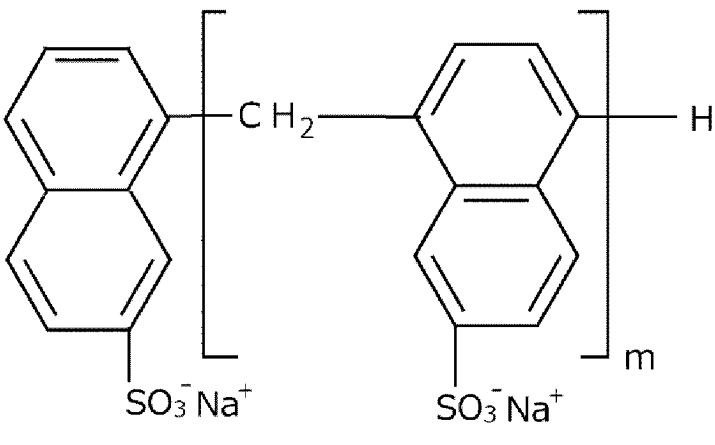

Chemical Formula 1

where m represents an integer of from 1 to 4,

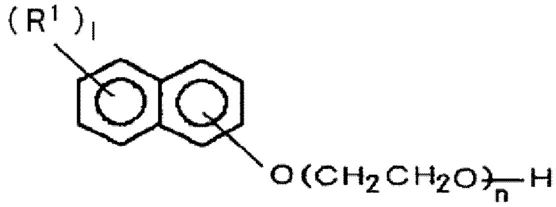

Chemical Formula 2

where $R^1$ represents an alkyl group having 1 to 20 carbon atoms, or an aralkyl group having 7 or 8 carbon atoms, l represents 0 or an integer of from 1 to 7, and n represents an integer of from 20 to 200.

As another aspect of embodiments of the present disclosure, an inkjet printing device is provided which includes a container accommodating the ink mentioned above and an inkjet head including a nozzle plate having a nozzle through which the ink is discharged and an ink repulsion layer on the ink discharging surface of the nozzle plate, the ink repulsion layer containing a silicon resin.

As another aspect of embodiments of the present disclosure, a printing method is provided which includes applying the ink mentioned above to a substrate by an inkjet head including a nozzle through which the ink is discharged, wherein the inkjet head includes a nozzle plate having the nozzle and an ink repulsion layer on the ink discharging surface of the nozzle plate, the ink repulsion layer containing a silicon resin.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a schematic diagram illustrating a perspective view of an example of the inkjet printing device according to an embodiment of the present disclosure;
FIG. 2 is a schematic diagram illustrating a cross sectional form of an example of the entire configuration of the printing device according to an embodiment of the present disclosure;
FIG. 3 is a diagram illustrating a planar view of an example of the nozzle plate in the inkjet printing device according to an embodiment of the present disclosure;
FIG. 4 is a diagram illustrating an enlarged cross sectional view of the nozzle part of the nozzle plate in the inkjet printing device according to an embodiment of the present disclosure; and
FIG. 5 is a diagram illustrating a state in which an ink repulsion layer is formed by applying silicon resin using a dispenser.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

DESCRIPTION OF THE EMBODIMENTS

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Embodiments of the present invention are described in detail below with reference to accompanying drawings. In describing embodiments illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

## Ink

The ink of the present contains a coloring material, a water-soluble organic solvent, a compound represented by Chemical Formula 1 or Chemical Formula 2 below, a surfactant containing a first silicone-based compound having an HLB value of from 7.0 to 9.0 and a second silicone-based compound having an HLB value of from 14.0 to 18.0, and water

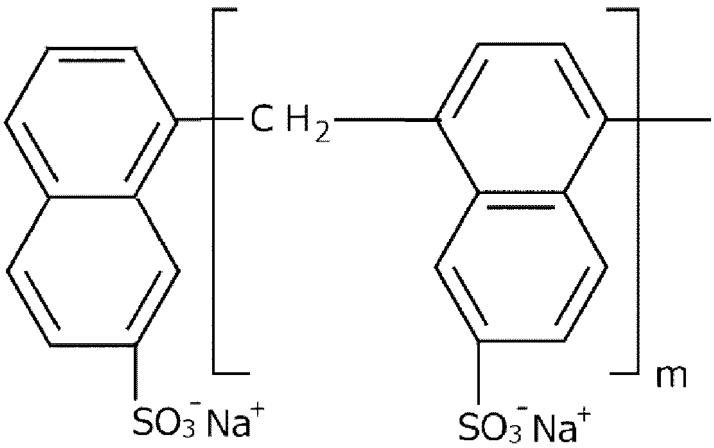

Chemical Formula 1

where, m represents an integer of from 1 to 4,

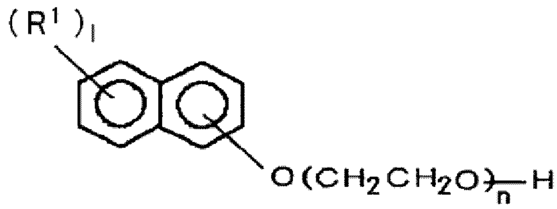

Chemical Formula 2

where $R^1$ represents an alkyl group having 1 to 20 carbon atoms, or aralkyl group having 7 or 8 carbon atoms, l represents 0 or an integer of from 1 to 7, and n represents an integer of from 20 to 200.

The organic solvent, water, coloring material, resin, and additive for use in the ink are described below.

## Organic Solvent

There is no specific limitation to the organic solvent for use in the present disclosure. For example, a water-soluble organic solvent can be used. It includes, but are not limited to, polyhydric alcohols, ethers such as polyhydric alcohol alkylethers and polyhydric alcohol aryl ethers, nitrogen-containing heterocyclic compounds, amides, amines, and sulfur-containing compounds.

Specific examples of the water-soluble organic solvent include, but are not limited to: polyhydric alcohols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butane diol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butane triol, 1,2,3-butanetriol, 2,2,4-trimethyl-1,3-pentanediol, and petriol; polyol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, and propylene glycol monoethyl ether; polyol aryl ethers such as ethylene glycol monophenyl ether and ethylene glycol monobenzyl ether; nitrogen-containing heterocyclic compounds such as 2-pyrrolidone, N-methyl-2-pyrrolidone, N-hydroxyethyl-2-pyrrolidone, 1,3-dimethyl-2-imidazolidinone, ε-caprolactam, and γ-butyrolactone; amides such as formamide, N-methylformamide, N,N-dimethylformamide, 3-methoxy-N,N-dimethyl propioneamide, and 3-buthoxy-N,N-dimethyl propioneamide; amines such as monoethanolamine, diethanolamine, and triethylamine; sulfur-containing compounds such as dimethyl sulfoxide, sulfolane, and thiodiethanol; propylene carbonate, and ethylene carbonate.

Of these, organic solvents having a boiling point of 200 degrees C or higher and a saturated moisture of 16.9 $mg/m^3$ or greater at 23 degrees C and 80 percent RH are preferable to enhance the permeability to media and drying

property.

Specific examples of the organic solvent include, but are not limited to, glycerin, 1,3-propanediol, and 1,3-butanediol. These organic solvents preferably account for 80 percent by mass or more of the entire organic solvents in ink.

The organic solvent in ink preferably has a solubility parameter (SP) value of 29.3 $(cal/cm^3)^{0.5}$ or greater to enhance the storage stability of the ink.

If ink contains a solvent mixture containing organic solvents, the solvent mixture preferably has an SP value of 29.3 $(cal/cm^3)^{0.5}$ or greater.

If the solvent mixture contains n types of organic solvents, the SP value of the solvent mixture can be calculated by the following relationship.

Mixing solvent SP value $(cal/cm^3)^{0.5}$ of organic solvents in ink = [SP value of organic solvent $S_1$ × volume fraction of organic solvent $S_1$] + • • • • + [SP value of organic solvent $S_n$ × volume fraction of organic solvent $S_n$]

**In** the present disclosure, in terms of ink blurring of black ink and color ink adjacent to each other, the solubility parameter of the black ink is at least 1.0 $(J/cm^3)^{0.5}$ greater than the solubility parameter of each of the cyan ink, the magenta ink, and the yellow ink.

When the mixing solvent SP value of color ink is lower than that of black ink or the mixing solvent SP value of color ink is lower than that of black ink with a difference of 1.0 $(J/cm^3)^{0.5}$ or greater, ink blurring does not occur because black ink and color ink adjacent to each other does not merge.

Polyol compounds having eight or more carbon atoms and glycol ether compounds are also suitable. Specific examples of the polyol compounds having eight or more carbon atoms include, but are not limited to, 2-ethyl-1,3-hexanediol and 2,2,4-trimethyl-1,3-pentanediol.

Specific examples of the glycolether compounds include, but are not limited to, polyhydric alcohol alkylethers such as ethylene glycol monoethylether, ethylene glycol monobutylether, diethylene glycol monomethylether, diethylene glycol monoethylether, diethylene glycol monobutylether, tetraethylene glycol monomethylether, and propylene glycol monoethylether and polyhydric alcohol arylethers such as ethylene glycol monophenylether and ethylene glycol monobenzylether.

A polyol compound having eight or more carbon atoms and a glycol ether compound enhance permeability of ink for paper used as a recording medium.

The proportion of the organic solvent in ink is not particularly limited and it can be suitably selected to suit to a particular application. It is preferably from 10 to 60 percent by mass and more preferably from 20 to 60 percent by mass to enhance the drying property and discharging reliability of the ink.

Water

The proportion of water to ink is not particularly limited and it can be suitably selected to suit to a particular application. It is preferably from 10 to 90 percent by mass and more preferably from 20 to 60 percent by mass to enhance the drying property and discharging reliability of ink.

Coloring Material

The coloring material has no particular limitation and includes materials such as a pigment and a dye.

The pigment includes an inorganic pigment or organic pigment. These can be used alone or in combination. In addition, a mixed crystal can also be used as the coloring material.

Examples of the pigments include, but are not limited to, black pigments, yellow pigments, magenta pigments, cyan pigments, white pigments, green pigments, orange pigments, and gloss or metallic pigments of gold, silver, and others.

Carbon black manufactured by known methods such as contact methods, furnace methods, and thermal methods can be used as the inorganic pigment in addition to titanium oxide, iron oxide, calcium carbonate, barium sulfate, aluminum hydroxide, barium yellow, cadmium red, and chrome yellow.

Specific examples of the organic pigment include, but are not limited to, azo pigments, polycyclic pigments (e.g., phthalocyanine pigments, perylene pigments, perinone pigments, anthraquinone pigments, quinacridone pigments, dioxazine pigments, indigo pigments, thioindigo pigments, isoindolinone pigments, and quinophthalone pigments), dye chelates (e.g., basic dye type chelates and acid dye type chelates), nitro pigments, nitroso pigments, and aniline black. Of those pigments, pigments having good affinity with solvents are preferable. Hollow resin particles and hollow inorganic particles can also be used.

Specific examples of the pigments for black include, but are not limited to, carbon black (C.I. Pigment Black 7)

such as furnace black, lamp black, acetylene black, and channel black, metals such as copper, iron (C.I. Pigment Black 11), and titanium oxide, and organic pigments such as aniline black (C.I. Pigment Black 1).

Specific examples of the pigments for color include, but are not limited to, C.I. Pigment Yellow 1, 3, 12, 13, 14, 17, 24, 34, 35, 37, 42 (yellow iron oxide), 53, 55, 74, 81, 83, 95, 97, 98, 100, 101, 104, 108, 109, 110, 117, 120, 138, 150, 153, 155, 180, 185, and 213; C.I. Pigment Orange 5, 13, 16, 17, 36, 43, and 51, C.I. Pigment Red 1, 2, 3, 5, 17, 22, 23, 31, 38, 48:2 {Permanent Red 2B(Ca)}, 48:3, 48:4, 49:1, 52:2, 53:1, 57:1 (Brilliant Carmine 6B), 60:1, 63:1, 63:2, 64:1, 81, 83, 88, 101 (rouge), 104, 105, 106, 108 (Cadmium Red), 112, 114, 122 (Quinacridone Magenta), 123, 146, 149, 166, 168, 170, 172, 177, 178, 179, 184, 185, 190, 193, 202, 207, 208, 209, 213, 219, 224, 254, and 264; C.I. Pigment Violet 1 (Rhodamine Lake), 3, 5:1, 16, 19, 23, and 38; C.I. Pigment Blue 1, 2, 15 (Phthalocyanine Blue), 15:1, 15:2, 15:3, 15:4, (Phthalocyanine Blue), 16, 17:1, 56, 60, and 63, C.I. Pigment Green 1, 4, 7, 8, 10, 17, 18, and 36.

The dye is not particularly limited and includes, for example, acidic dyes, direct dyes, reactive dyes, basic dyes. These can be used alone or in combination.

Specific examples of the dye include, but are not limited to, C.I. Acid Yellow 17, 23, 42, 44, 79, and 142, C.I. Acid Red 52, 80, 82, 249, 254, and 289, C.I. Acid Blue 9, 45, and 249, C.I. Acid Black 1, 2, 24, and 94, C. I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and C.I. Reactive Black 3, 4, and 35.

In terms of the discharging stability from an inkjet head and light resistance, the coloring material of black ink is preferably carbon black, the coloring material of cyan ink is preferably Pigment Blue 15:3, represented by the following Chemical Formula 3, the coloring material of magenta ink is preferably Pigment Red 122, represented by the following Chemical Formula 4, and the coloring material of magenta ink is preferably Pigment Yellow 74, represented by the following Chemical Formula 5.

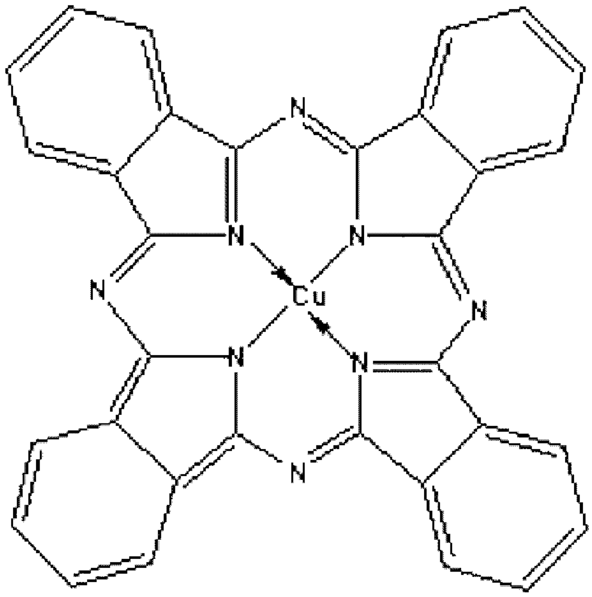

Chemical Structure 3

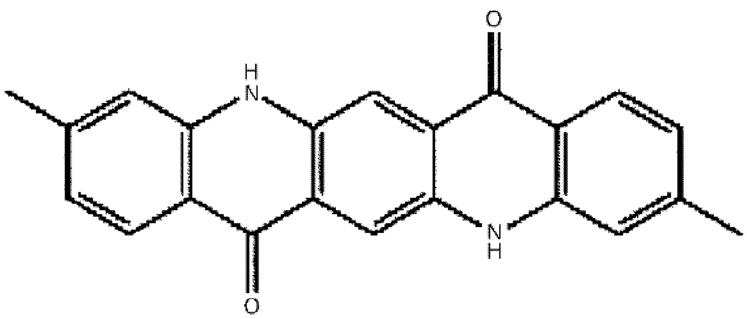

Chemical Structure 4

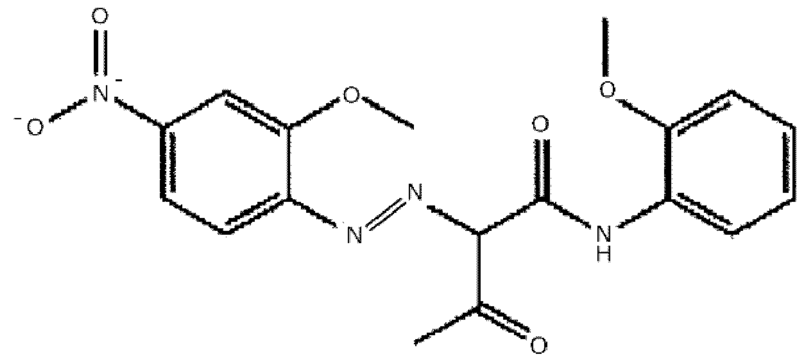

Chemical Structure 5

The proportion of the coloring material in ink is preferably from 0.1 to 15 percent by mass and more preferably from 1 to 10 percent by mass to enhance the image density, fixability, and discharging stability.

Pigment dispersion ink is obtained by, for example, preparing a self-dispersible pigment by introducing a hydrophilic functional group into a pigment, coating the surface of a pigment with a resin followed by dispersion, or using a dispersant for dispersing a pigment.

One way of preparing a self-dispersible pigment by introducing a hydrophilic functional group into a pigment is to add a functional group such as a sulfone group and carboxyl group to a pigment, typically carbon, to disperse the pigment in water.

One way of dispersing a pigment by coating the surface of the pigment with resin is to encapsulate pigment particles in microcapsules for dispersion in water. This can be referred to as a resin-coated pigment. The resin-coated pigment particles in ink are not necessarily entirely coated with resin.

Pigment particles not partially or wholly covered with resin may be dispersed in ink unless such particles have an adverse impact.

As the dispersant for use in the dispersion method described above, a known dispersant of a small or large molecular weight, typically a surfactant, is suitable.

The dispersant is represented by the following Chemical Formula 1 or Chemical Formula 2.

An aqueous pigment dispersion or aqueous ink having an excellent storage stability and a small average particle diameter can be produced with such a dispersant.

The mass proportion of the dispersant represented by the following Chemical Formula 1 or Chemical Formula 2 in ink is preferably from 0.01 to 0.5 and more preferably from 0.1 to 0.4. An ink having a proportion of a dispersant in the range specified above has a small volume average particle diameter, which achieves a good dispersibility of pigment and a suitable viscosity of ink.

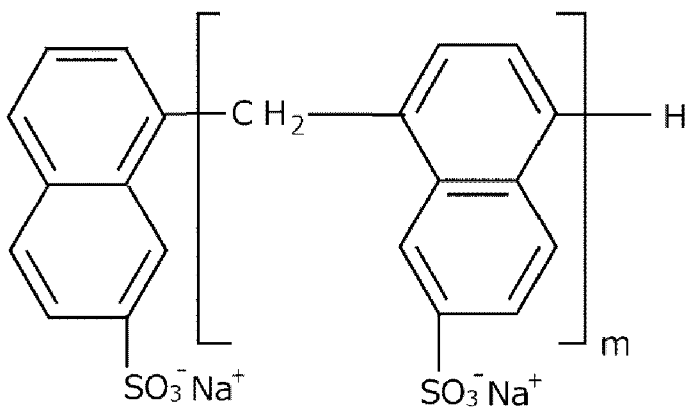

Chemical Formula 1

In Chemical Formula 1, m represents an integer of from 1 to 4,

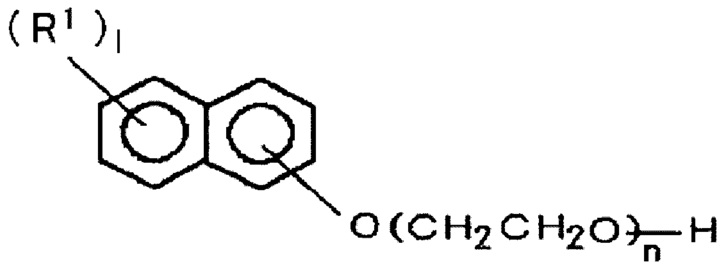

Chemical Formula 2

In Chemical Formula 2, $R^1$ represents an alkyl group having 1 to 20 carbon atoms, or an aralkyl group having 7 or 8 carbon atoms, l represents 0 or an integer of from 1 to 7, and n represents an integer of from 20 to 200.

A combinational use of a condensation product of naphthalene sulfonic acid and formalin as the compound represented by Chemical Formula 1 and polyoxyethylene-β-naphthyl ether as the compound represented by Chemical Formula 2 is preferable to achieve good dispersibility.

Fluorescent Brightener

Fluorescent brighteners, also referred to as fluorescent dyes, absorb ultraviolet on the short wavelength side of invisible light and turns it into visible light ranging from violet to blue. They increase the image density for better visibility.

Specific examples of the fluorescent brightener include, but are not limited to, those having a structural unit represented by the following Chemical Structure 1 or 2.

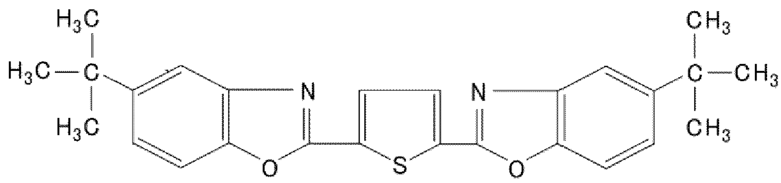

Chemical Structure 1

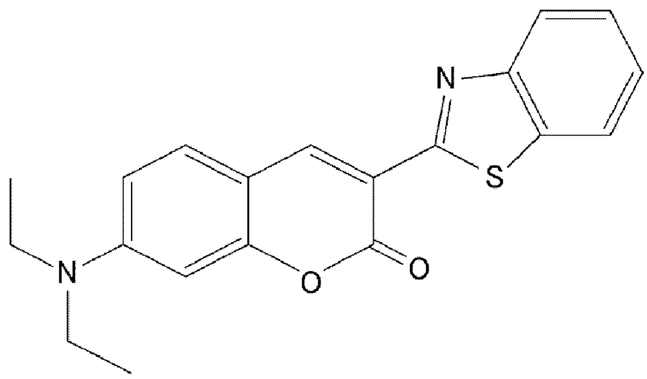

Chemical Structure 2

The brightener having the structural unit represented by Chemical Structure 1 illustrated above is benzooxazole or its derivative. The brightener having the structural unit represented by the Chemical Structure 2 illustrated above is benzooxazole coumarin or its derivative. These can be hydrophilic or hydrophobic.

The proportion of the fluorescent brightener in ink is preferably from 0.001 to 1 percent by mass and more preferably from 0.005 to 0.2 percent by mass. A proportion of the fluorescent brightener of 0.001 percent by mass or more increases the image density when printing. Conversely, a proportion of 1 percent by mass or less diminishes the density quenching phenomenon in which incident light is quickly absorbed or the fluorescence intensity decreases due to collision between molecules.

Specific examples of the fluorescent brightener include, but are not limited to, TINOPAL OB (manufactured by BASF Corporation), NIKKAFLUOR OB and NIKKABRIGHT PAW-L, and NIKKAFLUOR MCT (manufactured by Nippon Chemical Industrial CO., LTD.).

Fluorescent Brightening Enhancer

In the present disclosure, a combinational use of a fluorescent brightening enhancers and a fluorescent brightener is suitable to improve the effect of the fluorescent brightener. Fluorescent brightening enhancers improve the dispersibility of fluorescent brighteners and enhance the effect of the fluorescent brightener by surface migration. A specific example is polyether polyol.

The proportion of the fluorescent brightening enhancer to the coloring material in ink is preferably from 0.2 to 2 percent by mass and more preferably from 0.5 to 2 percent by mass. A proportion of a fluorescent brightening enhancer of 0.2 percent by mass or greater to a coloring material can increase the image density when printing. Conversely, a proportion of 2 percent by mass or less improves the discharging stability.

A specific example of the curable fluorescent whitening enhancer is OPTIACT I-10 (manufactured by SAN NOPCO LIMITED).

Pigment Dispersion

The ink can be obtained by mixing a pigment with materials such as water and an organic solvent. It is also possible to mix a pigment with water, a dispersant, and other substances to prepare a pigment dispersion and thereafter mix the pigment dispersion with materials such as water and an organic solvent to manufacture an ink.

The pigment dispersion is obtained by mixing or dispersing water, a pigment, a pigment dispersant, and other optional components and adjusting the particle diameter. It is good to use a dispersing device for dispersion.

The particle diameter of the pigment in a pigment dispersion has no particular limitation. For example, the maximum frequency is preferably from 20 to 500 nm and more preferably from 20 to 150 nm in the maximum number conversion to improve the dispersion stability of the pigment and ameliorate the discharging stability and the image quality such as image density. The particle diameter of the pigment can be analyzed using a particle size analyzer (Nanotrac Wave-UT151, manufactured by MicrotracBEL Corp).

The proportion of the pigment in the pigment dispersion is not particularly limited and can be suitably selected to suit a particular application. It is preferably from 0.1 to 50 percent by mass and more preferably from 0.1 to 30 percent by mass to enhance the discharging stability and image density.

It is preferable that the pigment dispersion be filtered with an instrument such as a filter and a centrifuge to remove coarse particles followed by deaerating.

Resin

The ink of the present disclosure preferably contains a polyether-based urethane resin represented by the following Chemical Formula 5. Inclusion of a polyether-based urethane resin represented by Chemical Formula 5 stably disperses a pigment and enhances the storage stability in particular. The resin represented by the Chemical Formula 5 can be identified by using gas chromatography-mass spectrometry (GC-MS) and nuclear magnetic resonance (NMR).

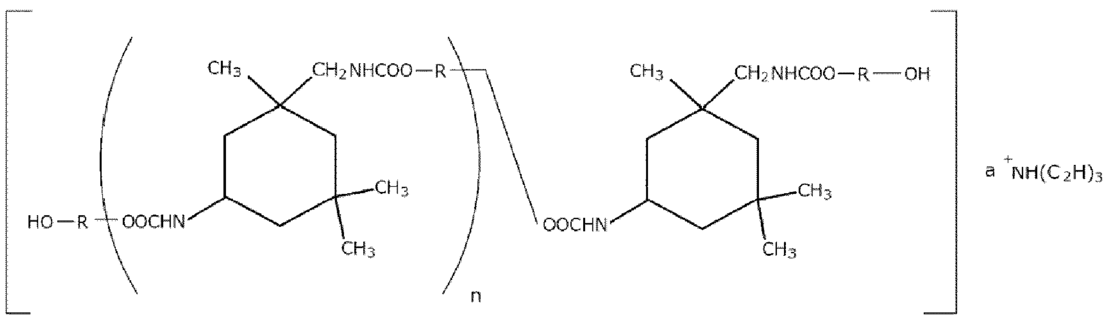

n:1-5

a:1-3

R:

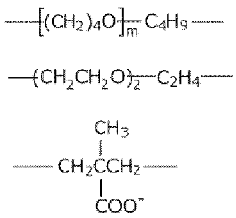

m:20-30

Chemical Formula 5

The acid value of the polyether-based urethane resin is preferably from 48 to 80 (KOHmg/g). An acid value in this region stabilizes dispersion of pigments and enhances the storage stability. The acid value of a resin can be measured by dissolving a measuring sample in a solution mixture of ethanol and ether, adding a phenolphthalein solution as an indicator, titrating a potassium hydroxide solution at 0.1 mol/l, and calculating the value from the amount of the potassium hydroxide solution required for titration.

The polyether-based urethane resin includes polyether-based urethane resin particles. Synthetic or procured resin particles can be used.

Specific examples of the procurable particles include, but are not limited to, TAKELAC™ W5661 and W932 (both manufactured by Mitsui Chemicals, Inc.) The resin particle can be used alone or two or more type of the resin particles can be used in combination.

The ink may contain other resins.

The type of the resin contained in ink has no particular limit and can be suitably selected to suit to a particular application. It includes, but are not limited to, urethane-based resins, polyester-based resins, acrylic-based resins, vinyl acetate-based resins, styrene-based resins, butadiene-based resins, styrene-butadiene-based resins, vinylchloride-based resins, acrylic styrene-based resins, and acrylic silicone-based resins.

The ink may contain resin particles made of such resins. In order to obtain the ink, such resin particles are dispersed in water as a dispersion medium to form a resin emulsion, which is mixed with materials such as a coloring material and an organic solvent.

The volume average particle diameter of the resin particle is not particularly limited and can be suitably selected to suit to a particular application. The volume average particle diameter is preferably from 10 to 1,000 nm, more preferably from 10 to 200 nm, and particularly preferably from 10 to 100 nm to achieve good fixability and image robustness.

The volume average particle diameter can be measured by using a device such as a particle size analyzer (Nanotrac Wave-UT151, manufactured by MicrotracBEL Corp.).

The proportion of the resin is not particularly limited and can be suitably selected to suit to a particular application. It is preferably from 1 to 30 percent by mass and more preferably from 5 to 20 percent by mass of the total mass of the ink to secure fixability and storage stability of an entire ink.

The particle diameter of the solid portion in ink is not particularly limited and can be suitably selected to suit to a particular application. For example, the maximum frequency in the maximum number conversion is preferably 20 to 1,000 nm and more preferably 20 to 150 nm to ameliorate the discharging stability and image quality such as image density. The solid content includes resin particles and particles of pigment and others. The particle diameter can be measured by using a particle size analyzer (Nanotrac Wave-UT151, manufactured by MicrotracBEL Corp). The mass ratio of the entire resin to the coloring material is preferably from 0.05 to 0.35 to enhance the image density and fixability.

Additive

The ink may further optionally include additives such as a surfactant, defoaming agent, preservative and fungicide, corrosion inhibitor, and pH regulator.

Surfactant

The ink of the present disclosure contains a silicone-based compound, preferably a silicone-based surfactant.

A surfactant having a low HLB value is generally added to enhance permeation or wettability to a substrate. However, a surfactant having a low HLB value is poorly dissolved in a vehicle containing water, which results in degradation of the storage stability and a problem of separation.

A combinational use of the first silicone-based compound having an HLB value of from 7.0 to 9.0 represented by the following Chemical Formula 3 and the second silicone-based compound having an HLB value of from 14.0 to 18.0 represented by the following Chemical Formula 4 is preferable in the present disclosure. Due to a combinational use of the first silicone-based compound having a low HLB value and the second silicone-based compound having a high HLB value, which are compatible with each other, liquid separation over time is prevented while maintaining the wettability to a substrate. The compound represented by Chemical Formula 3 and the compound represented by Chemical Formula 4 can be identified by utilizing GC-MS and NMR.

The HLB value of a surfactant for use in the present disclosure is to evaluate the hydrophilicity of a compound Griffin advocated and is calculated by the following relationship 1. The HLB value according to Griffin's method is in a range of from 1 to 20. As the HLB value increases, the hydrophilicity of a compound becomes more hydrophilic. HLB value = 20 $\times$ (percent by mass of hydrophilic group) = 20 $\times$ (sum of weight of hydrophilic group/molecular weight of surfactant Relationship 1

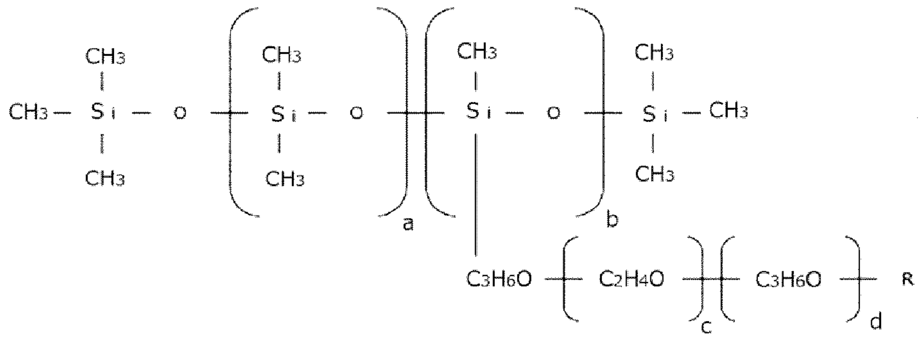

Chemical Formula 3

In Chemical Formula 3, a represents 0 or an integer of from 1 to 23, b represents an integer of from 1 to 10, c represents an integer of from 1 to 23, d represents 0 or an integer of from 1 to 23, and R represents a hydrogen atom or an alkyl group having 1 to 4 carbon atoms.

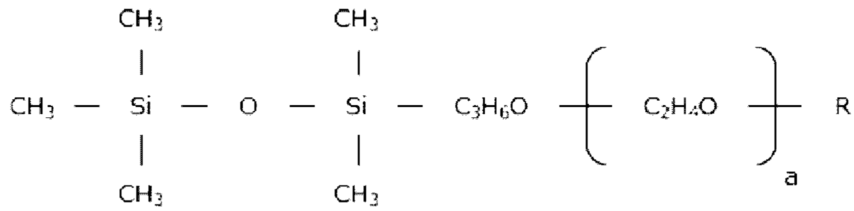

Chemical Formula 4

In Chemical Formula 4, a represents an integer of from 1 to 8 and R represents a hydrogen atom or an alkyl group having 1 to 4 carbon atoms.

The proportion of the silicone-based surfactant to an entire ink is preferably from 0.001 to 3 percent by mass and more preferably from 0.01 to 1 percent by mass.

Synthetic or procured silicone-based surfactants are usable. Specific examples of the products include, but are not limited to, KF-6012 and KF-6004, both manufactured by Shin-Etsu Chemical Co., Ltd., and SAG002 and SAG503A, both manufactured by Nissin Chemical co., ltd. Of these, KF-6012 and SAG503A are preferable in terms of the storage stability.

The mass ratio of the first silicone-based compound to the second silicone-based compound is preferably from 2:8 to 4:6 to prevent liquid separation that may occur during storage over an extended period of time.

The surfactant mentioned above can be used with other surfactants such as a fluorochemical surfactant, amphoteric surfactants, nonionic surfactants, and anionic surfactants.

The silicone-based surfactant has no specific limit and can be suitably selected to suit to a particular application.

Of these, surfactants not decomposable in a high pH environment are preferable. Examples of the silicone-based surfactants include, but are not limited to, side chain modified polydimethyl siloxane, both terminal-modified polydimethyl siloxane, one-terminal-modified polydimethyl siloxane, and side-chain-both-terminal-modified polydimethyl siloxane. In particular, silicone-based surfactants having a polyoxyethylene group or a polyoxyethylene polyoxypropylene group as a modification group are particularly preferable because such an aqueous surfactant demonstrates good properties. It is possible to use a polyether-modified silicone-based surfactant as the silicone-based surfactant. A specific example is a compound in which a polyalkylene oxide structure is introduced into the side chain of the Si site of dimethyl siloxane.

Specific examples of the fluorochemical surfactant include, but are not limited to, perfluoroalkyl sulfonic acid compounds, perfluoroalkyl carboxylic acid compounds, ester compounds of perfluoroalkyl phosphoric acid, adducts of perfluoroalkyl ethylene oxide, and polyoxyalkylene ether polymer compounds having a perfluoroalkyl ether group in its side chain. These are particularly preferable because the fluorochemical surfactant does not readily produce foams. Specific examples of the perfluoroalkyl sulfonic acid compounds include, but are not limited to, perfluoroalkyl sulfonic acid and salts of perfluoroalkyl sulfonic acid.

Specific examples of the perfluoroalkyl carbonic acid compounds include, but are not limited to, perfluoroalkyl carbonic acid and salts of perfluoroalkyl carbonic acid.

Specific examples of the polyoxyalkylene ether polymer compounds having a perfluoroalkyl ether group in its side chain include, but are not limited to, sulfuric acid ester salts of polyoxyalkylene ether polymer having a perfluoroalkyl ether group in its side chain, and salts of polyoxyalkylene ether polymers having a perfluoroalkyl ether group in its side chain. Counter ions of salts in these fluorochemical surfactants are, for example, Li, Na, K, $NH_4$, $NH_3CH_2CH_2OH$, $NH_2(CH_2CH_2OH)_2$, and $NH(CH_2CH_2OH)_3$.

Specific examples of the amphoteric surfactants include, but are not limited to, lauryl aminopropionic acid salts, lauryl dimethyl betaine, stearyl dimethyl betaine, and lauryl dihydroxyethyl betaine.
Specific examples of the nonionic surfactants include, but are not limited to, polyoxyethylene alkyl phenyl ethers, polyoxyethylene alkyl esters, polyoxyethylene alkyl amines, polyoxyethylene alkyl amides, polyoxyethylene propylene block polymers, sorbitan aliphatic acid esters, polyoxyethylene sorbitan aliphatic acid esters, and adducts of acetylene alcohol with ethylene oxides.
Specific examples of the anionic surfactants include, but are not limited to, polyoxyethylene alkyl ether acetates, dodecyl benzene sulfonates, laurates, and polyoxyethylene alkyl ether sulfates.
These can be used alone or in combination.

Defoaming Agent

The defoaming agent has no particular limit. Examples include, but are not limited to silicon-based defoaming agents, polyether-based defoaming agents, aliphatic acid ester-based defoaming agents, and acetylene-based compounds.
The acetylene-based compound used as a defoaming agent has an HLB value of from 3.0 to 5.0 in the present disclosure.
This defoaming agent having a low HLB value enters the interface between liquid and air, and it demonstrates a good defoaming property.
Synthetic or procured acetylene-based defoaming agents are usable.
Specific examples of the procurable agents include, but are not limited to, SURFYNOL DF1100 and OLFINE$^{registered}$ D-10A and D-10PG (all manufactured by Nissin Chemical Industry Co., Ltd.) and ACETYLENOL$^{registered}$ E13T and E40 (both manufactured by Kawaken Fine Chemicals Co., Ltd.).
In addition to the acetylene-based compound, Surfynol AD01 2,4,7,9-tetramethyldecyne-4,7-diol, manufactured by Nissin Chemical co., ltd. is usable in the present disclosure.
Of the defoaming agents, OLFINE$^{registered}$ D-10PG and ACETYLENOL$^{registered}$ E40 are particularly preferable as the acetylene-based compound. As the other defoaming agent, SURFYNOL AD01 is particularly preferable. These can be used alone or in combination.

Preservatives and Fungicides

The preservatives and fungicides are not particularly limited. A specific example is 1,2-benzisothiazoline-3-one.

Corrosion Inhibitor

The corrosion inhibitor has no particular limitation. Specific examples include, but are not limited to, acid sulfites and sodium thiosulfates.

pH Regulator

The pH regulator has no particular limit as long as it can control pH to be not lower than 7. Specific examples include, but are not limited to, amines such as diethanol amine and triethanol amine.
The properties of the ink mentioned above are not particularly limited and can be suitably selected to suit to a particular application. For example, viscosity, surface tension, and pH are preferably in the following ranges.
The viscosity of the ink is preferably from 5 to 30 mPa· s and more preferably from 5 to 25 mPa·s at 25 degrees C to improve the print density and text quality and achieve good dischargeability. Viscosity can be measured by an instrument such as a rotatory viscometer (RE-80L, manufactured by TOKI SANGYO CO., LTD.). The measuring conditions are as follows:

Standard cone rotor (1°34' × R24)
Sample liquid amount: 1.2 mL
Rate of rotations: 50 rotations per minute (rpm)
25 degrees C
Measuring time: three minutes.

The surface tension of the ink mentioned above is preferably 35 mN/m or less and more preferably 32 mN/m or less at 25 degrees C because the ink suitably levels on a recording medium and dries in a shorter time. The surface tension of each of cyan ink, magenta ink, and yellow ink is lower than that of black ink to minimize color bleed between the inks. The

difference between black ink and the other inks is preferably 3.0 mN/m or greater and more preferably from 3.0 to 7.0 mN/m.

pH of the ink is preferably from 7 to 12 and more preferably from 8 to 11 to prevent corrosion of metal material in contact with liquid.

Pre-processing Fluid

The pre-processing fluid contains a flocculant, an organic solvent, water, and optional materials such as a surfactant, a defoaming agent, a pH regulator, a preservatives and fungicides, and a corrosion inhibitor.

The organic solvent, the surfactant, the defoaming agent, the pH regulator, the preservatives and fungicides, and the corrosion inhibitor are the same materials as those for use in ink and materials for use in known processing fluid.

The type of the flocculant is not particularly limited. For example, water-soluble cationic polymers, acids, and multi-valent metal salts are suitable.

Post-processing Fluid

The post-processing fluid has no particular limit. It is preferable that the post-processing fluid can form a transparent layer. Materials such as organic solvents, water, resins, surfactants, defoaming agents, pH regulators, preservatives and fungicides, and corrosion inhibitors are suitably selected based on a necessity basis and mixed to obtain post-processing fluid. The post-processing fluid can be applied to the entire recording region formed on a recording medium or only the region on which an ink image is formed.

Recording Medium

The recording medium for use in printing is not particularly limited. Specific examples include, but are not limited to, plain paper, glossy paper, special paper, cloth, film, transparent sheets, and printing paper for general purposes.

Printed Matter

Ink printed matter includes a recording medium and an image formed on the recording medium with the ink contained in the ink set of the present disclosure.

The printed matter is obtained by an inkjet recording device executing an inkjet recording method.

Recording Device

As illustrated in FIG. 1, an inkjet recording device 101 of the present disclosure includes a sheet feeder tray 102 that accommodates recording media and a sheet ejection tray 103 that stores recording media on which images are formed. An upper cover 111 of the inkjet recording device 101 has a flat upper surface. A front surface 112 of the front cover of the inkjet recording device 101 is slanted down from the upper surface toward the rear of the inkjet printing device 101. The sheet ejection tray 103 and the sheet feeder tray 102 protrude forward (front side) below the front surface 112 of this slanted front cover.

On one side of the front surface 112 of the front cover, the inkjet recording device 101 includes an ink cartridge insertion portion 104, which is disposed lower than the upper cover 111 while protruding toward the front from the front surface 112. The ink cartridge insertion portion 104 has an openable and closable front cover 115 for attaching and detaching an ink cartridge to and from the inkjet recording device 101.

Inside the inkjet recording device 101, as illustrated in FIG. 2, a guide rod 131 and a stay 132 that are laterally bridged between the side plates on the right side and the left side as guiding members hold a carriage 133 slidably movable in the main scanning direction. A main scanning motor moves the carriage 133 for scanning.

The carriage 133 carries a printing head 134 composed of four inkjet heads for discharging ink droplets of each color of yellow (Y), cyan (C), magenta (M), and black (K) while multiple ink discharging orifices are arranged in the direction crossing the main scanning direction with the ink droplet discharging direction downward.

As the inkjet heads that constitutes the printing head 134, it is possible to use a device having an energy-generating unit that discharges ink such as a piezoelectric actuator such as a piezoelectric element, a thermal actuator that utilizes the phase change caused by film boiling of liquid using an electric heat conversion element such as a heat element, a shape-memory alloy actuator that uses the metal phase change due to the temperature change, and an electrostatic actuator that uses an electrostatic force.

The carriage 133 has sub tanks 135 as containers of each color for supplying each color ink to the printing head 134. The ink is supplied and replenished to the sub-tanks 135 from an ink cartridge mounted onto the ink cartridge insertion

portion 104 via an ink supplying tube.

A sheet feeding unit for feeding a sheet 142 loaded on a sheet loader 141 of the sheet feeder tray 102 includes a half-moon shape roller (sheet feeding roller) 143 for separating and feeding the sheet 142 one sheet by one sheet from the sheet loader 141, and it also includes a separation pad 144 facing the sheet feeding roller 143. The separation pad 144 is made of a material having a large friction index and biased towards the sheet feeding roller 143.

A conveyance unit for conveying the sheet 142 fed from the sheet feeding unit below the printing head 134 includes a conveyor belt 151 that electrostatically adsorbs and conveys the sheet 142, a counter roller 152 that conveys the sheet 142 fed from the sheet feeding unit via a guide 145 while pinching the sheet 142 with the conveyor belt 151, a conveying guide 153 by which the sheet 142 moves on the conveyor belt 151 by changing the conveying direction of the sheet 142 being sent vertically upward by 90 degrees, and a front end pressing roller 155 biased towards the conveyor belt 151 by a pressure member 154. In addition, a charging roller 156 as a charger is disposed to charge the surface of the conveyor belt 151.

The conveyor belt 151 is an endless form belt, stretched between a conveying roller 157 and a tension roller 158 and rotatable in the belt conveying direction.

This conveyor belt 151 includes, for example, a top layer as a substrate adsorption surface made of a resin material such as a copolymer (ETFE) of tetrafluoroethylene and ethylene with no resistance control treatment having a thickness of about 40 $\mu$m, and a bottom layer (moderate resistance layer, earth layer) made of the same material as the top layer and subjected to a resistance control treatment with carbon.

On the rear side of the conveyor belt 151, a guiding member 161 is disposed corresponding to the print region by the printing head 134.

Furthermore, as the sheet ejection unit for ejecting the sheet 142 on which an image is recorded by the printing head 134, there are provided a separation claw 171 for separating the sheet 142 from the conveyor belt 151, an ejection roller 172, and an ejection roller 173. The sheet ejection tray 103 is located below the ejection roller 172.

The recording sheet adsorbed onto the conveyor belt 151 is ejected while being pressed from above by the ejection roller 173. Basically, the conveyor belt 151 and conveying roller 157 convey recording sheets. The ejection roller 173 assists minimizing floating of the sheets.

The inkjet printer mentioned above can successfully minimize the number of rollers in comparison with a typical printer, thereby reducing the number of dirts and scratches on a recording image.

A duplex printing sheet feeding unit 181 is mounted in a detachable and attachable manner onto the rear side of the inkjet recording device 101. The duplex printing sheet feeding unit 181 takes in the sheet 142, which is reversed by the reverse rotation of the conveyor belt 151 and fed between the counter roller 152 and the conveyor belt 151 again. A bypass sheet feeding unit 182 is provided on the upper surface of the duplex printing sheet feeding unit 181.

During duplex printing, a sheet is conveyed to the duplex printing sheet feeding unit 181 after printing on one side of a sheet without downtime and reverses there. The ink of the present disclosure permeates a sheet well and quickly evaporates because it contains less moisture. The sheet reverses without contaminating a printed image even without a drying time or drying device such as a heater.

In the inkjet printing device configured in the manner described above, the sheet 142 is separated from the feeder tray 2 one piece by one piece, fed vertically upward while guided by the guide 145, and conveyed while pinched between the conveyor belt 151 and the counter roller 152, and the front of the sheet 142 is driven by the conveying guide 153 and pressed to the conveyor belt 151 by the front end pressing roller 155, thereby changing the conveying direction 90 degrees.

Since the charging roller 156 charges the conveyor belt 151 at this point, the conveyor belt 151 conveys the sheet 142 while electrostatically adsorbing it. The carriage moves while carrying the printing head 134, and the printing head 134 is driven and discharges ink droplets to the sheet 142 not in motion in response to an image signal to print an image in an amount of a single line. The printing head 134 then prints the following line after the sheet 142 is conveyed in a predetermined amount. On receiving a signal indicating that the printing completes or the rear end of the sheet 142 has reached the image printing region, the printing operation finishes and the sheet 142 is ejected to the sheet ejection tray 103.

By applying an AC bias to the charging belt to alternately charge the conveyor belt 151 positively and negatively at a constant pitch, the conveyor belt 151 adsorbs the sheet 142 by the electrostatic force attributable to fine electric fields intermittently generated by the alternate charging. The AC bias applied is preferably from -2.6 to -1.2 kV and from 1.2 to 2.6 kV and more preferably from -2.4 to -1.6 kV and from 1.6 to 2.4 kV. If an AC bias is below the lower limit, the sheet 142 is not sufficiently adsorbed. When above the upper limit, fine droplets produced upon ink discharging from a nozzle are affected by charges and return to the head instead of moving to the sheet 142, which leads to contamination around the head. The impact of charges on fine droplets depends on electrical properties of ink. As the electric conductivity of ink increases, the droplets discharged are subject to charges. Reducing the conductivity is preferable.

When the amount of ink in the sub-tank 135 approaches empty, a predetermined amount of the ink is replenished to the sub-tank 135 from an ink cartridge.

FIG. 3 is a diagram illustrating a planar view of an example of the nozzle plate in the inkjet printing device of the

present disclosure.

The nozzle plate for use in the present disclosure is described with reference to FIG. 3 and FIG. 4.

FIG. 3 is a diagram illustrating a planar view of the nozzle plate and FIG. 4 is a diagram illustrating an enlarged cross sectional view of one of nozzle parts.

A nozzle plate 10 includes a nozzle substrate 20, where a hole 21 is formed as a nozzle 11. Liquid is discharged through the nozzle 11. The nozzle plate 10 also includes an intermediate layer 30 formed on the surface of a nozzle substrate 2 and an ink repulsion layer 40 formed on the liquid discharging side.

The nozzle substrate 20 is made of a flat metal member. The nozzle substrate 20 uses flat stainless steel metal member but is not limited thereto.

The nozzle 11 includes a cylindrical part 21a on the liquid discharging surface side and a truncated cone member 21b on the reverse side of the liquid discharging surface.

The intermediate layer 30 includes an underlying layer formed of one or more layers of, for example, a $SiO_2$ layer and a silane coupling agent layer. The intermediate layer 30 can be omitted.

The ink repulsion layer 40 contains silicon resin.

The ink repulsion layer 40 has a slope region 41, where a slope 41a slants along the thickness decreasing towards an edge 11a of the nozzle 11 at the peripheral portion of the nozzle 11. A region 42 of the ink repulsion layer 40 excluding the slope region 41 has a substantially constant thickness. The slope 41a of the slope region 41 can be straight or folded in a cross sectional view.

The average thickness of the surface of the ink repulsion layer 40 on the ink discharging side is preferably from 1 to 3 μm.

The intermediate layer 30 preferably contains a silane coupling agent having an amino group, forming the underlying layer of the ink repulsion layer 40. The intermediate layer 30 and the ink repulsion layer 40 are firmly attached by mutual interaction of the amino group and the liquid repulsive material.

Method of Manufacturing Nozzle Member of Inkjet Head

FIG. 5 is a diagram illustrating a configuration of an ink repulsion layer 31 formed on the surface of the nozzle plate 32 by applying silicon resin with a dispenser 34 relating to the present embodiment.

The dispenser 34 is disposed to apply a silicon solution to the ink discharging side of the nozzle plate 32 by Ni electroforming. While scanning the dispenser 34, silicon resin is discharged from the front end of a needle 35 with the nozzle plate 32 and the front end of the needle 35 predeterminedly spaced constant therebetween. A silicon resin solution film is thus selectively formed on the ink discharging surface of the nozzle plate 32.

In the present embodiment, room-temperature curing silicon resin SR2411, manufactured by Dow Corning Toray Co., Ltd., is used as the silicone resin. A little amount of silicon unintentionally runs to the nozzle and the rear of the nozzle plate. The thickness of the silicon resin film selectively formed in this manner is 1.2 μm and the surface roughness Ra is 0.18 μm.

The ink repulsion layer 31 can be made of any material repulsive to ink. A specific example is a silicon-based water-repellent material.

It includes a room temperature curing liquid silicon resins or elastomers. It is preferable that these materials be applied to the surface of a substrate and allowed to rest at room temperature in an atmosphere for curing by polymerization, resulting in forming an ink repulsion film.

The silicon-based water-repellent material mentioned above can be a thermocuring liquid silicon resin or elastomer. The material can be applied to the surface of a substrate followed by heating to cure the material, resulting in forming an ink repulsion film.

The silicon-based water-repellent material mentioned above can be an ultraviolet-curing liquid silicon resin or elastomer. The material can be applied to the surface of a substrate followed by exposure to ultraviolet to cure the material, resulting in forming an ink repulsion film.

The silicon-based water-repellent film material preferably has a viscosity of 1,000 cp or less.

The ink repellent film preferably has a critical surface tension of from 5 to 40 mN/m and more preferably from 5 to 30 mN/m. At a critical surface tension greater than 30 mN/m, a nozzle plate becomes extremely wet by ink over an extended period of time, which may result in curving of ink discharging and production of abnormal particles for repetitive printing. At a critical surface tension greater than 40 mN/m, a nozzle plate becomes extremely wet by ink from the start, which may result in curving of ink discharging and production of abnormal particles from the start.

Terms such as image forming, recording, printing, and print used in the present disclosure represent the same meaning.

Also, recording media, media, and (print) substrates in the present disclosure have the same meaning unless otherwise specified.

The terms of image forming, recording, and printing in the present disclosure represent the same meaning.

Also, recording media, media, and print substrates in the present disclosure have the same meaning unless otherwise specified.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, embodiments of the present disclosure are described in detail with reference to Examples and Comparative Examples but are not limited thereto. In Examples, "parts" and "percent" are "parts by mass" and "percent by mass" unless otherwise specified. Unless otherwise specified, preparation and evaluation were conducted at a temperature of 23 degrees C and a humidity of 50 percent.

Manufacturing of Pigment Dispersion

Preparation of Black Pigment Dispersion

A total of 250 parts of carbon black, manufactured by Degussa AG, 50 parts of the compound represented by Chemical Formula 1, TAKESURF A-45-K, manufactured by TAKEMOTO OIL & FAT CO., LTD., and 700 parts of distilled water were preliminarily mixed to obtain a slurry mixture. The slurry mixture was subjected to circulation dispersion by a disk media mill of UMA type, manufactured by "Kotobuki Kougyo Kabushiki kaisha", with 0.015 mm zirconia beads having a filing ratio of 70 percent at a peripheral speed of 6 m/s and at a liquid temperature of 10 degrees C to achieve a volume average particle diameter of about 100 nm. Coarse particles were then separated from the resulting dispersion by a centrifugal, Model-7700, manufactured by Kubota Corporation. After the filtrate was further filtered with a filter having a pore diameter of 1.2 μm, the moisture of the resulting filtrate was adjusted to obtain a black pigment liquid dispersion having a solid concentration of 15 percent.

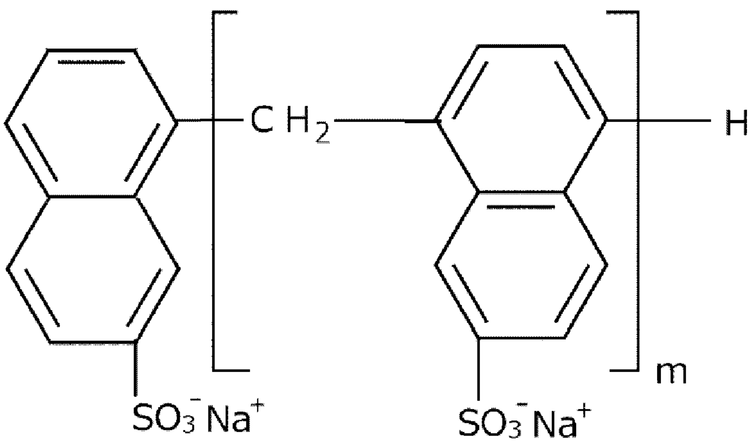

Chemical Formula 1

where, m represents an integer of from 1 to 4,

Preparation of Blue Pigment Dispersion

A total of 250 parts of Pigment Blue 15:3 (manufactured by Dainichiseika Color & Chemicals Mfg. Co., Ltd.), 50 parts of the compound represented by Chemical Formula 2, PIONINE D-7240, manufactured by TAKEMOTO OIL & FAT CO., LTD., and 700 parts of distilled water were preliminarily mixed to obtain a slurry mixture. The slurry mixture was subjected to circulation dispersion by a disk media mill of UMA type, manufactured by "Kotobuki Kougyo Kabushiki kaisha", with 0.015 mm zirconia beads having a filing ratio of 70 percent at a peripheral speed of 6 m/s and at a liquid temperature of 10 degrees C to achieve a volume average particle diameter of about 100 nm. Coarse particles were then separated from the resulting dispersion by a centrifugal, Model-7700, manufactured by Kubota Corporation. After the filtrate was further filtered with a filter having a pore diameter of 1.2 μm, the moisture of the resulting filtrate was adjusted to obtain a blue pigment liquid dispersion having a solid concentration of 15 percent.

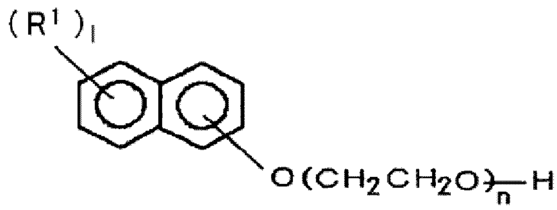

Chemical Formula 2

where $R^1$ represents an alkyl group having 1 to 20 carbon atoms, or aralkyl group having 7 or 8 carbon atoms, l represents 0 or an integer of from 1 to 7, and n represents an integer of from 20 to 200.

Preparation of Red Pigment Dispersion A

A red pigment dispersion A having a pigment concentration of 15 percent was obtained in the same manner as in Preparation of Blue Pigment Dispersion except that Pigment Blue 15:3 was changed to Pigment Red 122, manufactured by Dainichiseika Color & Chemicals Mfg. Co., Ltd.

Preparation of Red Pigment Dispersion B

A red pigment dispersion B having a pigment concentration of 15 percent was obtained in the same manner as in Preparation of Blue Pigment Dispersion except that Pigment Blue 15:3 was changed to Pigment Red 269, manufactured by Dainichiseika Color & Chemicals Mfg. Co., Ltd.

Preparation of Yellow Pigment Dispersion

A yellow pigment dispersion having a pigment concentration of 15 percent was obtained in the same manner as in Preparation of Blue Pigment Dispersion except that Pigment Blue 15:3 was changed to Pigment Red 74, manufactured by Dainichiseika Color & Chemicals Mfg. Co., Ltd.

Preparation of Styrene-Acrylic-based Resin Coated Pigment Dispersion

Preparation of Resin Coated Black Pigment Dispersion

A total of 11.2 g of styrene, 2.8 g of acrylic acid, 12 g of lauryl methacrylate, 4 g of polyethylene glycol methacrylate, 4 g of styrene macromer, and 0.4 g of mercapto ethanol were mixed in a flask followed by heating to 65 degrees C. Next, a liquid mixture of 100.8 g of styrene, 25.2 g of acrylic acid, 108 g of lauryl methacrylate, 36.2 g of polyethylene glycol methacrylate, 60 g of hydroxyethyl methacrylate, 36 g of styrene macromer, 3.6 g of mercapto ethanol, 2.4 g of azobismethyl valeronitrile, and 18 g of methylethyl ketone was added dropwise to the flask in two and a half hours. Subsequently, a liquid mixture of 0.8 g of azobismethyl valeronitrile and 18 g of methylethyl ketone was added dropwise to the flask in half an hour. After one-hour aging at 65 degrees C, 0.8 g of azobismethyl valeronitrile was added followed by aging for another hour. After the reaction was complete, 364 g of methylethyl ketone was added to the flask to obtain 800 g of a polymer solution having a solid content of 50 percent.

Next, 25 g of the polymer solution, 50 g of carbon black, manufactured by Cabot Corporation, 13.6 g of 1 mol/l potassium hydroxide solution, 20 g of methylethyl ketone, and 13.6 g of water were sufficiently stirred followed by mixing and kneading with a roll mill. The obtained paste was placed in 200 g of pure water followed by sufficient stirring. Methylethyl ketone was removed with an evaporator followed by pressure-filtering with a polyvinylidene fluoride membrane filter having an average pore diameter of 5 μm. The moisture of the filtrate was adjusted to obtain a dispersion of styrene-acrylic-based resin-coated black pigment having a concentration of solid portion of 20 percent (pigment concentration of 15 percent and coated resin concentration of 5 percent).

Preparation of Resin Coated Blue Pigment Dispersion

A styrene-acrylic resin coated blue pigment dispersion having a concentration of the solid portion of 20 percent (pigment concentration of 15 percent and coated resin concentration of 5 percent) was obtained in the same manner as in Preparation of Resin Coated Black Pigment Dispersion except that carbon black was changed to Pigment Blue 15:3, manufactured by Dainichiseika Color & Chemicals Mfg. Co., Ltd.

Preparation of Resin Coated Red Pigment Dispersion

A styrene-acrylic resin coated red pigment dispersion having a concentration of the solid portion of 20 percent (pigment concentration of 15 percent and coated resin concentration of 5 percent) was obtained in the same manner as in Preparation of Resin Coated Black Pigment Dispersion except that carbon black was changed to Pigment Red 122, manufactured by Dainichiseika Color & Chemicals Mfg. Co., Ltd.

Preparation of Resin Coated Yellow Pigment Dispersion

A styrene-acrylic resin coated yellow pigment dispersion having a concentration of the solid portion of 20 percent (pigment concentration of 15 percent and coated resin concentration of 5 percent) was obtained in the same manner as in Preparation of Resin Coated Black Pigment Dispersion except that carbon black was changed to Pigment Yellow 74, manufactured by Dainichiseika Color & Chemicals Mfg. Co., Ltd.

Preparation of Ink

The organic solvent, surfactant, other additives such as defoaming agents, pH regulators, and antibacterial agents, and deionized water shown in Tables 1 to 4 were mixed and stirred for one hour.
Next, resin particles were added followed by stirring for one hour to uniformly mix the mixture. Thereafter, each of the pigment dispersions was added to the mixture followed by stirring for one hour to uniformly mix the mixture. The thus-obtained mixture was pressure-filtered with a polyvinilydene fluoride membrane filter having an average pore diameter of 0.8 μm to remove coarse particles and dust to obtain ink.

Resin Particle

- · Polyether-based urethane resin particle A, TAKELAC[trademark] W5661, manufactured by Mitsui Chemicals, Inc., compound Represented by Chemical Formula 5, acid value of 48 KOHmg/g
- · Polyether-based urethane resin particle B, TAKELAC[trademark] W932, manufactured by Mitsui Chemicals, Inc., compound Represented by Chemical Formula 5, acid value of 80 KOHmg/g Acrylic resin particle, NeoCryl A-1125, manufactured by Kusumoto Chemicals, Ltd., acid value of 157 KOHmg/g

Organic Solvent

Organic solvent A, glycerin, manufactured by Sakamoto Yakuhin Kogyo Co., Ltd. * boiling point of 290.0 degrees C, saturated moisture content of 20.7 mg/$cm^3$ at 23 degrees C and 80 percent RH, SP value of 35.7 $(J/cm^3)^{0.5}$
Organic solvent B, 1,3-butane diol, manufactured by Tokyo Chemical Industry Co. Ltd., boiling point of 204.0 degrees, saturated moisture content of 16.9 mg/$cm^3$ at 23 degrees C and 80 percent RH

SP value of 29.1 $(J/cm^3)^{0.5}$

Organic solvent C, 1,2-butane diol, manufactured by Tokyo Chemical Industry Co. Ltd., boiling point of 194.0 degrees C, saturated moisture content of 11.1 mg/$cm^3$ at 23 degrees C and 80 percent RH, SP value of 26.9 $(J/cm^3)^{0.5}$

Surfactant

- · Silicone-based surfactant A, KF-6012, manufactured by Shin-Etsu Chemical Co., Ltd., HLB = 7.0, compound represented by Chemical Formula 3
- · Silicone-based surfactant B, KF-6004, manufactured by Shin-Etsu Chemical Co., Ltd., HLB = 9.0, compound represented by Chemical Formula 3
- · Silicone-based surfactant C, SAG503A, manufactured by Nissin Chemical co., ltd., HLB = 14.0, compound represented by Chemical Formula 4
- · Silicone-based surfactant D, SAG002, manufactured by Nissin Chemical co., ltd., HLB = 18.0, compound represented by Chemical Formula 4
- · Silicone-based surfactant E, SAG008, manufactured by Nissin Chemical co., ltd., HLB = 11.0, compound represented by Chemical Formula 4

· Fluorochemical surfactant, PF 656, manufactured by OMNOVA-Chemie GmbH

Defoaming Agent

· Defoaming agent A,. acetylene-based surfactant, Surfynol DF110D, HLB = 3.0, manufactured by Nissin Chemical co., ltd.

· Defoaming agent B, acetylene-based surfactant, ACETYLENOL[registered] E40, HLB = 5.0, manufactured by Kawaken Fine Chemicals Co., Ltd.

· Defoaming agent C, Surfynol AD01, 2,4,7,9-tetramethyldecyne-4,7-diol, manufactured by Nissin Chemical co., ltd.

· Defoaming agent D, KM-85, manufactured by Shin-Etsu Silicone

pH Regulator

2-amino-2-ethyl-1,3-propanediol, manufactured by Tokyo Chemical Industry Co., Ltd.

Preservatives and Fungicides

LV(S), manufactured by Avecia Inkjet Limited

Printing Method

A print chart was printed by an image forming device (IPSiO Gxe5500, manufactured by Ricoh Co., Ltd.) having a nozzle plate having an ink repulsion layer of room temperature curing silicon resin, SR2411, manufactured by Dow Corning Toray Co., Ltd., on recording media, MyPaper, manufactured by NBS Ricoh Co., Ltd., with black, cyan, magenta, and yellow ink shown in Tables 1 to 4 at a printing resolution of 600 dpi $\times$ 600 dpi and dried at room temperature for one day and one night. The dried images obtained were determined as print samples. Each print chart was a solid image of each color or a solid image of black solid image adjacent to a color solid image.

Evaluation on Image Density

The image density of the solid images of the print sample was measured using an image measuring device, Exact, manufactured by X-Rite Inc.

The image density of a color image suitable for practical purpose is as follows.

Black: 1.15 or higher
Cyan: 0.95 or higher
Magenta: 0.90 or higher
Yellow: 0.75 or higher

Evaluation on Fixability

An abrasion device, clock meter, manufactured by DAIEI KAGAKU SEIKI MFG. co., ltd., equipped with cotton cloth was moved back and forth five times on the solid images in the print sample. The density of the ink transferred to the cotton cloth was measured by an image measuring device, Exact, manufactured by X-Rite Inc.

Evaluation Criteria

Less than 0.10 percent: No problem
0.10 to less than 0.13: Causing no practical problem
0.13 or greater: Causing a practical problem

Evaluation on Blurring

The black solid image and the color solid images were visually checked regarding blurring at the boundaries. The black ink used had the lowest surface tension among Examples.

Evaluation Criteria

A: No sign of blurring
B: Blurring present but causing no practical problem
C: Blurring present
-: Out of evaluation (black ink)

Evaluation on Storage Stability

The ink was placed in a sealed bottle, Iboy, manufactured by AS ONE Corporation. The bottle was stored at 70 degrees C in a thermostatic chamber, PR-3J, manufactured by ESPEC Corp. for 14 days. Viscosity of the ink before and after the storage was measured by a viscometer, RE-85L, manufactured by Toki Sangyo Co., Ltd.) and the viscosity change rate was calculated from the initial state.

Evaluation Criteria

Greater than -5.0 to less than 5.0 percent: No problem
Greater than -7.0 to -5.0 percent and 5.0 to less than 7.0 percent: causing no practical problem irrespective of viscosity change
-7.0 percent or less and 7.0 percent or greater: Causing a practical problem

Evaluation on Surface Tension of Ink

The static surface tension of the ink was measured with a static surface tensiometer, DY-300, manufactured by Kyowa Interface Science Co., Ltd.

Table 1

| Ink component category | Ink component | Black | Black | Black | Black | Black |
|---|---|---|---|---|---|---|
| | | Example 1 | Example 2 | Example 3 | Example 4 | Example 5 |
| Pigment dispersion | Black pigment dispersion (dispersant: compound of Chemical Formula 1) | 40.0 | 40.0 | 26.7 | 20.0 | 40.0 |
| | Blue pigment dispersion (dispersant: compound of Chemical Formula 2) | | | | | |
| | Red pigment dispersion A (dispersant: compound of Chemical Formula 2) | | | | | |
| | Red pigment dispersion B (dispersant: compound of Chemical Formula 2) | | | | | |
| | Yellow pigment dispersion (dispersant: compound of Chemical Formula 2) | | | | | |

(continued)

| Ink component category | Ink component | Black Example 1 | Black Example 2 | Black Example 3 | Black Example 4 | Black Example 5 |
|---|---|---|---|---|---|---|
| Resin coated pigment dispersion | Resin coated black pigment dispersion | | | 26.7 | 20.0 | |
| | Resin coated blue pigment dispersion | | | | | |
| | Resin coated red pigment dispersion | | | | | |
| | Resin coated yellow pigment dispersion | | | | | |
| Resin particle | Polyether urethane resin A (compound of Chemical Formula 5) | | | | | |
| | Polyether urethane resin B (compound of Chemical Formula 5) | 0.3 | 0.3 | 0.4 | 0.4 | 0.2 |
| | Acrylic resin particle | | | | | |
| Organic solvent | Organic solvent A (SP value: 35.7) | 15.0 | 15.0 | 15.0 | 15.0 | 15.0 |
| | Organic solvent B (SP value: 29.1) | 10.0 | 10.0 | 10.0 | 10.0 | 10.0 |
| | Organic solvent C (SP value: 26.9) | | | | | |
| Surfactant | Silicone-based surfactant A (Chemical Formula 3, HLB:7.0] | | 0.05 | | | |
| | Silicone-based surfactant B (Chemical Formula 3, HLB:9.0] | 0.05 | | 0.05 | 0.05 | 0.05 |
| | Silicone-based surfactant C (Chemical Formula 4, HLB:14.0] | 0.10 | 0.10 | 0.10 | 0.10 | 0.10 |
| | Silicone-based surfactant D (Chemical Formula 4, HLB:18.0] | | | | | |
| | Silicone-based surfactant E (Chemical Formula 4, HLB:11.0] | | | | | |
| | Fluorochemical surfactant | | | | | |
| Defoaming agent | Defoaming agent A (HLB:3.0) | | | | | |
| | Defoaming | | | | | |
| | agent B (HLB:5.0) | | | | | |
| | Defoaming agent C | 1.0 | 1.0 | 1.0 | 1.0 | 1.0 |
| | Defoaming agent D | | | | | |
| pH regulator | 2-amino-2-ethyl-1,3-propane diol | 1.0 | 1.0 | 1.0 | 1.0 | 1.0 |

(continued)

| Ink component category | Ink component | Black Example 1 | Black Example 2 | Black Example 3 | Black Example 4 | Black Example 5 |
|---|---|---|---|---|---|---|
| Preservatives and fungicides | LV(S) | 0.1 | 0.1 | 0.1 | 0.1 | 0.1 |
| Water | Deionized water | Balance | Balance | Balance | Balance | Balance |
| | Total | 100.0 | 100.0 | 100.0 | 100.0 | 100.0 |
| Evaluation item | Surface tension (mN/m) | 31.2 | 30.9 | 31.0 | 30.8 | 31.4 |
| | SP value of organic solvent | 16.1 | 16.1 | 16.1 | 16.1 | 16.1 |
| | Storage stability (percent) at 70 degrees C for two weeks | 0.6 | 1.1 | 2.6 | 2.4 | 5.1 |
| | Image density | 1.21 | 1.20 | 1.20 | 1.18 | 1.24 |
| | Fixability | 0.07 | 0.05 | 0.06 | 0.04 | 0.11 |
| | Blurring | - | - | - | - | - |
| Check item | R/P ratio | 0.05 | 0.05 | 0.22 | 0.23 | 0.03 |
| | Ratio of SAA1 | 3.3 | 3.3 | 3.3 | 3.3 | 3.3 |
| | Ratio of SAA2 | 6.7 | 6.7 | 6.7 | 6.7 | 6.7 |

| Ink component category | Ink component | Black Example 6 | Black Example 7 | Black Example 8 | Black Example 9 | Black Example 10 |
|---|---|---|---|---|---|---|
| Pigment dispersion | Black pigment dispersion (dispersant: compound of Chemical Formula 1) | 20.0 | 20.0 | 40.0 | 40.0 | 40.0 |
| | Blue pigment dispersion (dispersant: compound of Chemical Formula 2) | | | | | |
| | Red pigment dispersion A (dispersant: compound of Chemical Formula 2) | | | | | |
| | Red pigment dispersion B (dispersant: compound of Chemical Formula 2) | | | | | |
| | Yellow pigment dispersion (dispersant: compound of Chemical Formula 2) | | | | | |
| Resin coated pigment dispersion | Resin coated black pigment dispersion | 20.0 | 20.0 | | | |
| | Resin coated blue pigment dispersion | | | | | |
| | Resin coated red pigment dispersion | | | | | |
| | Resin coated yellow pigment dispersion | | | | | |

(continued)

| Ink component | Ink component | Black Example | Black Example | Black Example | Black Example | Black Example |
|---|---|---|---|---|---|---|
| Resin particle | Polyether urethane resin A (compound of Chemical Formula 5) | | | 0.4 | | |
| | Polyether urethane resin B (compound of Chemical Formula 5) | 1.1 | 1.4 | | | 0.4 |
| | Acrylic resin particle | | | | 0.4 | |
| Organic solvent | Organic solvent A (SP value: 35.7) | 15.0 | 15.0 | 15.0 | 15.0 | 15.0 |
| | Organic solvent B (SP value: 29.1) | 10.0 | 10.0 | 10.0 | 10.0 | 10.0 |
| | Organic solvent C (SP value: 26.9) | | | | | |
| Surfactant | Silicone-based surfactant A (Chemical Formula 3, HLB:7.0] | | | | | |
| | Silicone-based surfactant B (Chemical Formula 3, HLB:9.0] | 0.05 | 0.05 | 0.05 | 0.05 | 0.05 |
| | Silicone-based surfactant C (Chemical Formula 4, HLB:14.0] | 0.10 | 0.10 | 0.10 | 0.10 | |
| | Silicone-based surfactant D (Chemical Formula 4, HLB:18.0] | | | | | 0.10 |
| | Silicone-based surfactant E (Chemical Formula 4, HLB:11.0] | | | | | |
| | Fluorochemical surfactant | | | | | |
| Defoaming agent | Defoaming agent A (HLB:3.0) | | | | | |
| | Defoaming agent B (HLB:5.0) | | | | | |
| | Defoaming agent C | 1.0 | 1.0 | 1.0 | 1.0 | 1.0 |
| | Defoaming agent D | | | | | |
| pH regulator | 2-amino-2-ethyl-1,3-propane diol | 1.0 | 1.0 | 1.0 | 1.0 | 1.0 |
| Preservatives and fungicides | LV(S) | 0.1 | 0.1 | 0.1 | 0.1 | 0.1 |
| Water | Deionized water | Balance | Balance | Balance | Balance | Balance |
| | Total | 100.0 | 100.0 | 100.0 | 100.0 | 100.0 |
| Evaluation item | Surface tension (mN/m) | 30.3 | 30.1 | 31.0 | 31.7 | 31.5 |
| | SP value of organic solvent | 16.1 | 16.1 | 16.1 | 16.1 | 16.1 |
| | Storage stability (percent) at 70 degrees C for two weeks | 4.9 | 5.2 | 3.2 | 5.1 | 0.3 |
| | Image density | 1.18 | 1.16 | 1.22 | 1.25 | 1.22 |
| | Fixability | 0.02 | 0.01 | 0.07 | 0.10 | 0.08 |
| | Blurring | - | - | - | - | - |

(continued)

| Ink component | Ink component | Black Example | Black Example | Black Example | Black Example | Black Example |
|---|---|---|---|---|---|---|
| Check item | R/P ratio | 0.35 | 0.40 | 0.07 | 0.07 | 0.07 |
| | Ratio of SAA1 | 3.3 | 3.3 | 3.3 | 3.3 | 3.3 |
| | Ratio of SAA2 | 6.7 | 6.7 | 6.7 | 6.7 | 6.7 |

Table 2

| Ink component category | Ink component | Black Example 11 | Black Example 12 | Black Example 13 | Black Example 14 | Black Example 15 |
|---|---|---|---|---|---|---|
| Pigment dispersion | Black pigment dispersion (dispersant: compound of Chemical Formula 1) | 40.0 | 40.0 | 40.0 | 40.0 | 40.0 |
| | Blue pigment dispersion (dispersant: compound of Chemical Formula 2) | | | | | |
| | Red pigment dispersion A (dispersant: compound of Chemical Formula 2) | | | | | |
| | Red pigment dispersion B (dispersant: compound of Chemical Formula 2) | | | | | |
| | Yellow pigment dispersion (dispersant: compound of Chemical Formula 2) | | | | | |
| Resin coated pigment dispersion | Resin coated black pigment dispersion | | | | | |
| | Resin coated blue pigment dispersion | | | | | |
| | Resin coated red pigment dispersion | | | | | |
| | Resin coated yellow pigment dispersion | | | | | |
| Resin particle | Polyether urethane resin particle A (compound of Chemical Formula 5) | | | | | |
| | Polyether urethane resin particle B (compound of Chemical Formula 5) | 0.4 | 0.4 | 0.4 | 0.4 | 0.4 |
| | Acrylic resin particle | | | | | |
| Organic solvent | Organic solvent A (SP value: 35.7) | 15.0 | 15.0 | 15.0 | 15.0 | 15.0 |
| | Organic solvent B (SP value: 29.1) | 10.0 | 10.0 | 10.0 | 10.0 | 10.0 |
| | Organic solvent C (SP value: 26.9) | | | | | |

(continued)

| Ink component category | Ink component | Black | Black | Black | Black | Black |
|---|---|---|---|---|---|---|
| | | Example 11 | Example 12 | Example 13 | Example 14 | Example 15 |
| Surfactant | Silicone-based surfactant A (Chemical Formula 3, HLB:7.0] | | | | | |
| | Silicone-based surfactant B (Chemical Formula 3, HLB:9.0] | 0.05 | 0.10 | 0.03 | 0.10 | 0.05 |
| | Silicone-based surfactant C (Chemical Formula 4, HLB:14.0] | 0.20 | 0.15 | 0.20 | 0.10 | 0.10 |
| | Silicone-based surfactant D (Chemical Formula 4, HLB:18.0] | | | | | |
| | Silicone-based surfactant E (Chemical Formula 4, HLB:11.0] | | | | | |
| | Fluorochemical surfactant | | | | | |
| Defoaming agent | Defoaming agent A (HLB:3.0) | | | | | 1.0 |
| | Defoaming agent B (HLB:5.0) | | | | | |
| | Defoaming agent C | 1.0 | 1.0 | 1.0 | 1.0 | |
| | Defoaming agent D | | | | | |
| pH regulator | 2-amino-2-ethyl-1,3-propane diol | 1.0 | 1.0 | 1.0 | 1.0 | 1.0 |
| Preservatives and fungicides | LV(S) | 0.1 | 0.1 | 0.1 | 0.1 | 0.1 |
| Water | Deionized water | Balance | Balance | Balance | Balance | Balance |
| | Total | 100.0 | 100.0 | 100.0 | 100.0 | 100.0 |
| Evaluation item | Surface tension (mN/m) | 30.8 | 30.3 | 31.0 | 30.5 | 30.9 |
| | SP value of organic solvent | 16.1 | 16.1 | 16.1 | 16.1 | 16.1 |
| | Storage stability (percent) at 70 degrees C for two weeks | 2.3 | 4.8 | 3.3 | 5.1 | 3.8 |
| | Image density | 1.16 | 1.22 | 1.16 | 1.20 | 1.24 |
| | Fixability | 0.05 | 0.08 | 0.06 | 0.07 | 0.07 |
| | Blurring | - | - | - | - | - |
| Check item | R/P ratio | 0.07 | 0.07 | 0.07 | 0.07 | 0.07 |
| | Ratio of SAA1 | 2.0 | 4.0 | 1.3 | 5.0 | 3.3 |
| | Ratio of SAA2 | 8.0 | 6.0 | 8.7 | 5.0 | 6.7 |

| Ink component category | Ink component | Black | Black | Black | Black | Cyan |
|---|---|---|---|---|---|---|
| | | Example 16 | Example 17 | Example 18 | Example 19 | Example 20 |
| Pigment dispersion | Black pigment dispersion (dispersant: compound of Chemical Formula 1) | 40.0 | 40.0 | 40.0 | 40.0 | |
| | Blue pigment dispersion (dispersant: compound of Chemical Formula 2) | | | | | 40.0 |

(continued)

| Ink component category | Ink component | Black Example 16 | Black Example 17 | Black Example 18 | Black Example 19 | Cyan Example 20 |
|---|---|---|---|---|---|---|
| | Red pigment dispersion A (dispersant: compound of Chemical Formula 2) | | | | | |
| | Red pigment dispersion B (dispersant: compound of Chemical Formula 2) | | | | | |
| | Yellow pigment dispersion (dispersant: compound of Chemical Formula 2) | | | | | |
| Resin coated pigment dispersion | Resin coated black pigment dispersion | | | | | |
| | Resin coated blue pigment dispersion | | | | | |
| | Resin coated red pigment dispersion | | | | | |
| | Resin coated yellow pigment dispersion | | | | | |
| Resin particle | Polyether urethane resin particle A (compound of Chemical Formula 5) | | | | | |
| | Polyether urethane resin particle B (compound of Chemical Formula 5) | 0.4 | 0.4 | | 0.3 | 1.0 |
| | Acrylic resin particle | | | 0.4 | | |
| Organic solvent | Organic solvent A (SP value: 35.7) | 15.0 | 15.0 | 15.0 | 15.0 | 11.0 |
| | Organic solvent B (SP value: 29.1) | 10.0 | 10.0 | 10.0 | | 21.0 |
| | Organic solvent C (SP value: 26.9) | | | | 10.0 | |
| Surfactant | Silicone-based surfactant A (Chemical Formula 3, HLB:7.0] | | | | | |
| | Silicone-based surfactant B (Chemical Formula 3, HLB:9.0] | 0.05 | 0.05 | 0.05 | 0.05 | 0.10 |
| | Silicone-based surfactant C (Chemical Formula 4, HLB:14.0] | 0.10 | 0.10 | 0.10 | 0.10 | 0.20 |
| | Silicone-based surfactant D (Chemical Formula 4, HLB:18.0] | | | | | |
| | Silicone-based surfactant E (Chemical Formula 4, HLB:11.0] | | | | | |
| | Fluorochemical surfactant | | | | | |

(continued)

| Ink component category | Ink component | Black Example 16 | Black Example 17 | Black Example 18 | Black Example 19 | Cyan Example 20 |
|---|---|---|---|---|---|---|
| Defoaming agent | Defoaming agent A (HLB:3.0) | | | | | |
| | Defoaming agent B (HLB:5.0) | 1.0 | | | | |
| | Defoaming agent C | | | 1.0 | 1.0 | 1.0 |
| | Defoaming agent D | | 1.0 | | | |
| pH regulator | 2-amino-2-ethyl-1,3-propane diol | 1.0 | 1.0 | 1.0 | 1.0 | 1.0 |
| Preservatives and fungicides | LV(S) | 0.1 | 0.1 | 0.1 | 0.1 | 0.1 |
| Water | Deionized water | Balance | Balance | Balance | Balance | Balance |
| | Total | 100.0 | 100.0 | 100.0 | 100.0 | 100.0 |
| Evaluation item | Surface tension (mN/m) | 31.0 | 31.4 | 31.7 | 30.9 | 26.5 |
| | SP value of organic solvent | 16.1 | 16.1 | 16.1 | 15.7 | 15.3 |
| | Storage stability (percent) at 70 degrees C for two weeks | 3.9 | 5.3 | 5.1 | 1.7 | 1.8 |
| | Image density | 1.23 | 1.22 | 1.25 | 1.22 | 1.02 |
| | Fixability | 0.07 | 0.09 | 0.10 | 0.06 | 0.04 |
| | Blurring | - | - | - | - | A |
| Check item | R/P ratio | 0.07 | 0.07 | 0.07 | 0.05 | 0.17 |
| | Ratio of SAA1 | 3.3 | 3.3 | 3.3 | 3.3 | 3.3 |
| | Ratio of SAA2 | 6.7 | 6.7 | 6.7 | 6.7 | 6.7 |

Table 3

| Ink component category | Ink component | Magenta Example 21 | Magenta Example 22 | Yellow Example 23 | Cyan Example 24 |
|---|---|---|---|---|---|
| Pigment dispersion | Black pigment dispersion (dispersant: compound of Chemical Formula 1) | | | | |
| | Blue pigment dispersion (dispersant: compound of Chemical Formula 2) | | | | 20.0 |
| | Red pigment dispersion A (dispersant: compound of Chemical Formula 2) | 40.0 | | | |
| | Red pigment dispersion B (dispersant: compound of Chemical Formula 2) | | 40.0 | | |
| | Yellow pigment dispersion (dispersant: compound of Chemical Formula 2) | | | 40.0 | |

(continued)

| Ink component category | Ink component | Magenta Example 21 | Magenta Example 22 | Yellow Example 23 | Cyan Example 24 |
|---|---|---|---|---|---|
| Resin coated pigment dispersion | Resin coated black pigment dispersion | | | | |
| | Resin coated blue pigment dispersion | | | | 20.0 |
| | Resin coated red pigment dispersion | | | | |
| | Resin coated yellow pigment dispersion | | | | |
| Resin particle | Polyether urethane resin A (compound of Chemical Formula 5) | | | | |
| | Polyether urethane resin particle B (compound of Chemical Formula 5) | 1.0 | 1.0 | 1.0 | 1.0 |
| | Acrylic resin particle | | | | |
| Organic solvent | Organic solvent A (SP value: 35.7) | 11.0 | 11.0 | 11.0 | 11.0 |
| | Organic solvent B (SP value: 29.1) | 21.0 | 21.0 | 21.0 | 21.0 |
| | Organic solvent C (SP value: 26.9) | | | | |
| Surfactant | Silicone-based surfactant A (Chemical Formula 3, HLB:7.0] | | | | |
| | Silicone-based surfactant B (Chemical Formula 3, HLB:9.0] | 0.10 | 0.10 | 0.10 | 0.10 |
| | Silicone-based surfactant C (Chemical Formula 4, HLB:14.0] | 0.20 | 0.20 | 0.20 | 0.20 |
| | Silicone-based surfactant D (Chemical Formula 4, HLB:18.0] | | | | |
| | Silicone-based surfactant E (Chemical Formula 4, HLB:11.0] | | | | |
| | Fluorochemical surfactant | | | | |
| Defoaming agent | Defoaming agent A (HLB:3.0) | | | | |
| | Defoaming agent A (HLB:5.0) | | | | |
| | Defoaming agent C | 1.0 | 1.0 | 1.0 | 1.0 |
| | Defoaming agent D | | | | |
| pH regulator | 2-amino-2-ethyl-1,3-propane diol | 1.0 | 1.0 | 1.0 | 1.0 |
| Preservatives and fungicides | LV(S) | 0.1 | 0.1 | 0.1 | 0.1 |
| Water | Deionized water | Balance | Balance | Balance | Balance |
| | Total | 100.0 | 100.0 | 100.0 | 100.0 |

(continued)

| Ink component category | Ink component | Magenta | Magenta | Yellow | Cyan |
|---|---|---|---|---|---|
| | | Example 21 | Example 22 | Example 23 | Example 24 |
| Evaluation item | Surface tension (mN/m) | 26.1 | 26.2 | 26.0 | 26.2 |
| | SP value of organic solvent | 15.3 | 15.3 | 15.3 | 15.3 |
| | Storage stability (percent) at 70 degrees C for two weeks | 3.8 | 3.7 | 4.2 | 3.1 |
| | Image density | 0.92 | 0.98 | 0.95 | 0.98 |
| | Fixability | 0.06 | 0.08 | 0.06 | 0.03 |
| | Blurring | A | A | A | A |
| Check item | R/P ratio | 0.17 | 0.17 | 0.17 | 0.33 |
| | Ratio of SAA1 | 3.3 | 3.3 | 3.3 | 3.3 |
| | Ratio of SAA2 | 6.7 | 6.7 | 6.7 | 6.7 |

| Ink component category | Ink component | Magenta | Magenta | Yellow | Yellow | Yellow |
|---|---|---|---|---|---|---|
| | | Example 25 | Example 26 | Example 27 | Example 28 | Example 29 |
| Pigment dispersion | Black pigment dispersion (dispersant: compound of Chemical Formula 1) | | | | | |
| | Blue pigment dispersion (dispersant: compound of Chemical Formula 2) | | | | | |
| | Red pigment dispersion A (dispersant: compound of Chemical Formula 2) | 20.0 | | | | |
| | Red pigment dispersion B (dispersant: compound of Chemical Formula 2) | | 20.0 | | | |
| | Yellow pigment dispersion (dispersant: compound of Chemical Formula 2) | | | 20.0 | 20.0 | 20.0 |
| Resin coated pigment dispersion | Resin coated black pigment dispersion | | | | | |
| | Resin coated blue pigment dispersion | | | | | |
| | Resin coated red pigment dispersion | 20.0 | 20.0 | | | |
| | Resin coated yellow pigment dispersion | | | 20.0 | 20.0 | 20.0 |
| Resin particle | Polyether urethane resin A (compound of Chemical Formula 5) | | | | | |
| | Polyether urethane resin particle B (compound of Chemical Formula 5) | 1.0 | 1.0 | 1.0 | 1.0 | 1.0 |
| | Acrylic resin particle | | | | | |

(continued)

| Ink component category | Ink component | Magenta Example 25 | Magenta Example 26 | Yellow Example 27 | Yellow Example 28 | Yellow Example 29 |
|---|---|---|---|---|---|---|
| Organic solvent | Organic solvent A (SP value: 35.7) | 11.0 | 11.0 | 11.0 | 13.0 | 15.0 |
| | Organic solvent B (SP value: 29.1) | 21.0 | 21.0 | 21.0 | 17.0 | 15.0 |
| | Organic solvent C (SP value: 26.9) | | | | | |
| Surfactant | Silicone-based surfactant A (Chemical Formula 3, HLB:7.0] | | | | | |
| | Silicone-based surfactant B (Chemical Formula 3, HLB:9.0] | 0.10 | 0.10 | 0.10 | 0.05 | 0.10 |
| | Silicone-based surfactant C (Chemical Formula 4, HLB:14.0] | 0.20 | 0.20 | 0.20 | 0.15 | 0.15 |
| | Silicone-based surfactant D (Chemical Formula 4, HLB:18.0] | | | | | |
| | Silicone-based surfactant E (Chemical Formula 4, HLB:11.0] | | | | | |
| | Fluorochemical surfactant | | | | | |
| Defoaming agent | Defoaming agent A (HLB:3.0) | | | | | |
| | Defoaming agent A (HLB:5.0) | | | | | |
| | Defoaming agent C | 1.0 | 1.0 | 1.0 | 1.0 | 1.0 |
| | Defoaming agent D | | | | | |
| pH regulator | 2-amino-2-ethyl-1,3-propane diol | 1.0 | 1.0 | 1.0 | 1.0 | 1.0 |
| Preservatives and fungicides | LV(S) | 0.1 | 0.1 | 0.1 | 0.1 | 0.1 |
| Water | Deionized water | Balance | Balance | Balance | Balance | Balance |
| | Total | 100.0 | 100.0 | 100.0 | 100.0 | 100.0 |
| Evaluation item | Surface tension (mN/m) | 25.8 | 26.0 | 25.0 | 27.3 | 27.7 |
| | SP value of organic solvent | 15.3 | 15.3 | 15.3 | 15.6 | 15.8 |
| | Storage stability (percent) at 70 degrees C for two weeks | 3.6 | 4.0 | 2.1 | 1.8 | 1.8 |
| | Image density | 0.90 | 0.96 | 0.78 | 0.76 | 0.75 |
| | Fixability | 0.05 | 0.07 | 0.03 | 0.05 | 0.05 |
| | Blurring | A | A | A | A | B |
| Check item | R/P ratio | 0.33 | 0.33 | 0.33 | 0.33 | 0.33 |
| | Ratio of SAA1 | 3.3 | 3.3 | 3.3 | 2.5 | 4.0 |
| | Ratio of SAA2 | 6.7 | 6.7 | 6.7 | 7.5 | 6.0 |

Table 4

| Ink component category | Ink component | Black Comparative Example 1 | Black Comparative Example 2 | Black Comparative Example 3 | Black Comparative Example 4 |
|---|---|---|---|---|---|
| Pigment dispersion | Black pigment dispersion (dispersant: compound of Chemical Formula 1) | 40.0 | 40.0 | 40.0 | 40.0 |
| | Blue pigment dispersion (dispersant: compound of Chemical Formula 2) | | | | |
| | Red pigment dispersion A (dispersant: compound of Chemical Formula 2) | | | | |
| | Red pigment dispersion B (dispersant: compound of Chemical Formula 2) | | | | |
| | Yellow pigment dispersion (dispersant: compound of Chemical Formula 2) | | | | |
| Resin coated pigment dispersion | Resin coated black pigment dispersion | | | | |
| | Resin coated blue pigment dispersion | | | | |
| | Resin coated red pigment dispersion | | | | |
| | Resin coated yellow pigment dispersion | | | | |
| Resin particle | Polyether urethane resin A (compound of Chemical Formula 5) | | | | |
| | Polyether urethane resin particle B (compound of Chemical Formula 5) | 0.4 | 0.4 | 0.4 | 0.4 |
| | Acrylic resin particle | | | | |
| Organic solvent | Organic solvent A (SP value: 35.7) | 15.0 | 15.0 | 15.0 | 15.0 |
| | Organic solvent B (SP value: 29.1) | 10.0 | 10.0 | 10.0 | 10.0 |
| | Organic solvent C (SP value: 26.9) | | | | |
| Surfactant | Silicone-based surfactant A (Chemical Formula 3, HLB:7.0] | | | | |
| | Silicone-based surfactant B (Chemical Formula 3, HLB:9.0] | 0.05 | | | |

(continued)

| Ink component category | Ink component | Black | Black | Black | Black |
|---|---|---|---|---|---|
| | | Comparative Example 1 | Comparative Example 2 | Comparative Example 3 | Comparative Example 4 |
| | Silicone-based surfactant C (Chemical Formula 4, HLB:14.0] | | 0.10 | | |
| | Silicone-based surfactant D (Chemical Formula 4, HLB:18.0] | | | | |
| | Silicone-based surfactant E (Chemical Formula 4, HLB:11.0] | | | 0.15 | |
| | Fluorochemical surfactant | | | | 0.15 |
| Defoaming agent | Defoaming agent A (HLB:3.0) | | | | |
| | Defoaming agent B (HLB:5.0) | | | | |
| | Defoaming agent C | 1.0 | 1.0 | 1.0 | 1.0 |
| | Defoaming agent D | | | | |
| pH regulator | 2-amino-2-ethyl-1,3-propane diol | 1.0 | 1.0 | 1.0 | 1.0 |
| Preservatives and fungicides | LV(S) | 0.1 | 0.1 | 0.1 | 0.1 |
| Water | Deionized water | Balance | Balance | Balance | Balance |
| | Total | 100.0 | 100.0 | 100.0 | 100.0 |
| Evaluation item | Surface tension (mN/m) | 31.0 | 33.8 | 31.5 | 25.4 |
| | SP value of organic solvent | 16.1 | 16.1 | 16.1 | 16.1 |
| | Storage stability (percent) at 70 degrees C for two weeks | 7.4 | 2.5 | 7.1 | 7.0 |
| | Image density | 1.15 | 1.24 | 1.15 | 1.16 |
| | Fixability | 0.05 | 0.15 | 0.05 | 0.05 |
| | Blurring | - | - | - | - |
| Check item | R/P ration | 0.07 | 0.07 | 0.07 | 0.07 |
| | Ratio of SAA1 | 10.0 | 0.0 | - | - |
| | Ratio of SAA2 | 0.0 | 10.0 | - | - |

| Ink component category | Ink component | Black | Black | Cyan | Cyan |
|---|---|---|---|---|---|
| | | Comparative Example 5 | Comparative Example 6 | Comparative Example 7 | Comparative Example 8 |
| Pigment dispersion | Black pigment dispersion (dispersant: compound of Chemical Formula 1) | 40.0 | 40.0 | | |

(continued)

| Ink component category | Ink component | Black | Black | Cyan | Cyan |
|---|---|---|---|---|---|
| | | Comparative Example 5 | Comparative Example 6 | Comparative Example 7 | Comparative Example 8 |
| | Blue pigment dispersion (dispersant: compound of Chemical Formula 2) | | | 40.0 | 40.0 |
| | Red pigment dispersion A (dispersant: compound of Chemical Formula 2) | | | | |
| | Red pigment dispersion B (dispersant: compound of Chemical Formula 2) | | | | |
| | Yellow pigment dispersion (dispersant: compound of Chemical Formula 2) | | | | |
| Resin coated pigment dispersion | Resin coated black pigment dispersion | | | | |
| | Resin coated blue pigment dispersion | | | | |
| | Resin coated red pigment dispersion | | | | |
| | Resin coated yellow pigment dispersion | | | | |
| Resin particle | Polyether urethane resin A (compound of Chemical Formula 5) | | | | |
| | Polyether urethane resin particle B (compound of Chemical Formula 5) | 0.4 | 0.4 | 1.0 | 1.0 |
| | Acrylic resin particle | | | | |
| Organic solvent | Organic solvent A (SP value: 35.7) | 15.0 | 15.0 | 11.0 | 11.0 |
| | Organic solvent B (SP value: 29.1) | 10.0 | 10.0 | 21.0 | 21.0 |
| | Organic solvent C (SP value: 26.9) | | | | |
| Surfactant | Silicone-based surfactant A (Chemical Formula 3, HLB:7.0] | | | | |

(continued)

| Ink component category | Ink component | Black | Black | Cyan | Cyan |
|---|---|---|---|---|---|
| | | Comparative Example 5 | Comparative Example 6 | Comparative Example 7 | Comparative Example 8 |
| | Silicone-based surfactant B (Chemical Formula 3, HLB:9.0] | 0.05 | | 0.10 | |
| | Silicone-based surfactant C (Chemical Formula 4, HLB:14.0] | | 0.10 | | 0.20 |
| | Silicone-based surfactant D (Chemical Formula 4, HLB:18.0] | | | | |
| | Silicone-based surfactant E (Chemical Formula 4, HLB:11.0] | 0.15 | 0.15 | | |
| | Fluorochemical surfactant | | | | |
| Defoaming agent | Defoaming agent A (HLB:3.0) | | | | |
| | Defoaming agent B (HLB:5.0) | | | | |
| | Defoaming agent C | 1.0 | 1.0 | 1.0 | 1.0 |
| | Defoaming agent D | | | | |
| pH regulator | 2-amino-2-ethyl-1,3-propane diol | 1.0 | 1.0 | 1.0 | 1.0 |
| Preservatives and fungicides | LV(S) | 0.1 | 0.1 | 0.1 | 0.1 |
| Water | Deionized water | Balance | Balance | Balance | Balance |
| | Total | 100.0 | 100.0 | 100.0 | 100.0 |
| Evaluation item | Surface tension (mN/m) | 31.3 | 32.3 | 26.5 | 26.5 |
| | SP value of organic solvent | 16.1 | 16.1 | 15.3 | 15.3 |
| | Storage stability (percent) at 70 degrees C for two weeks | 7.0 | 5.1 | 8.1 | 2.4 |
| | Image density | 1.15 | 1.18 | 0.97 | 1.05 |
| | Fixability | 0.05 | 0.13 | 0.04 | 0.16 |
| | Blurring | - | - | A | A |
| Check item | R/P ration | 0.07 | 0.07 | 0.17 | 0.17 |
| | Ratio of SAA1 | - | - | 10.0 | 0.0 |
| | Ratio of SAA2 | - | - | 0.0 | 10.0 |

## Claims

**1.** An ink comprising:

a coloring material;
a water-soluble organic solvent;
a compound represented by the following Chemical Formula 1 or Chemical Formula 2;
a surfactant comprising a first silicone-based compound having an HLB value of from 7.0 to 9.0 and a second silicone-based compound having an HLB value of from 14.0 to 18.0; and

water

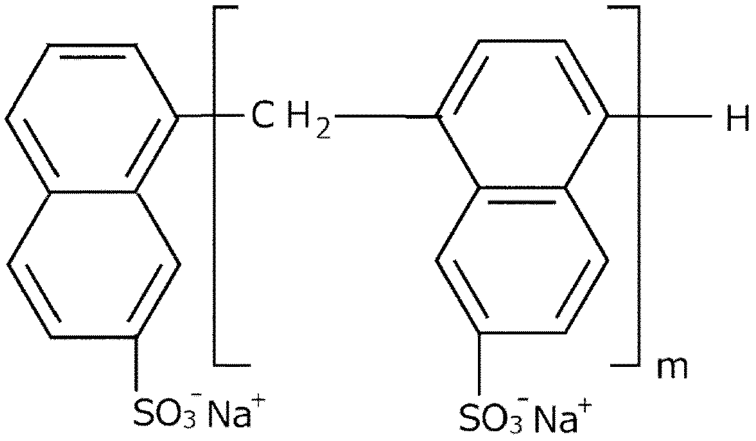

Chemical Formula 1

where, m represents an integer of from 1 to 4,

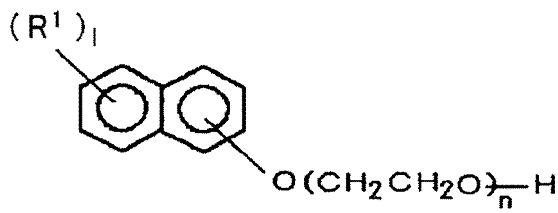

Chemical Formula 2

where $R^1$ represents an alkyl group having 1 to 20 carbon atoms, or an aralkyl group having 7 or 8 carbon atoms, l represents 0 or an integer of from 1 to 7, and n represents an integer of from 20 to 200.

**2.** The ink according to claim 1,

wherein the first silicone-based compound is represented by the following Chemical Formula 3,
wherein the second silicone-based compound is represented by the following Chemical Formula 4,

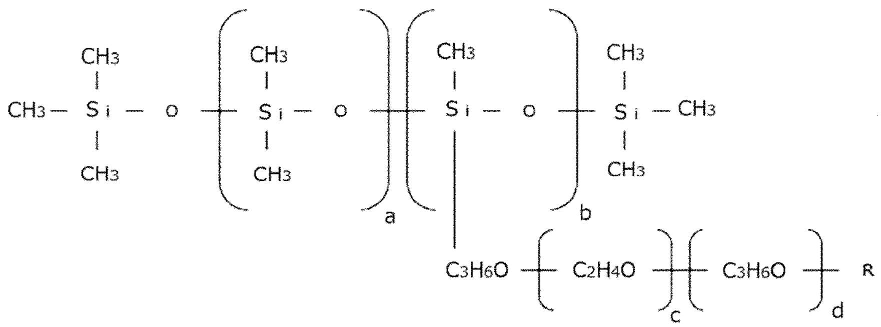

Chemical Formula 3

where, in Chemical Formula 3, a represents 0 or an integer of from 1 to 23, b represents an integer of from 1 to 10, c represents an integer of from 1 to 23, d represents 0 or an integer of from 1 to 23, and R represents a hydrogen atom or an alkyl group having 1 to 4 carbon atoms.

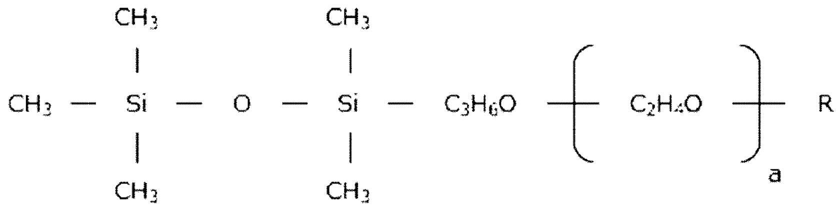

Chemical Formula 4

where, in Chemical Formula 4, a represents an integer of from 1 to 8 and R represents a hydrogen atom or an alkyl group having 1 to 4 carbon atoms.

**3.** The ink according to claim 1 or 2,
wherein a mass ratio of the first silicone-based compound to the second silicone-based compound is from 2:8 to 4:6.

**4.** 4. The ink according to any one of claims 1 to 3,
further comprising an acetylene-based compound having an HLB value of from 3.0 to 5.0 or 2,4,7,9-tetramethyldecyne-4,7-diol.

**5.** The ink according to any one of claims 1 to 4,
further comprising a polyether-based urethane resin represented by the following Chemical Formula 5,

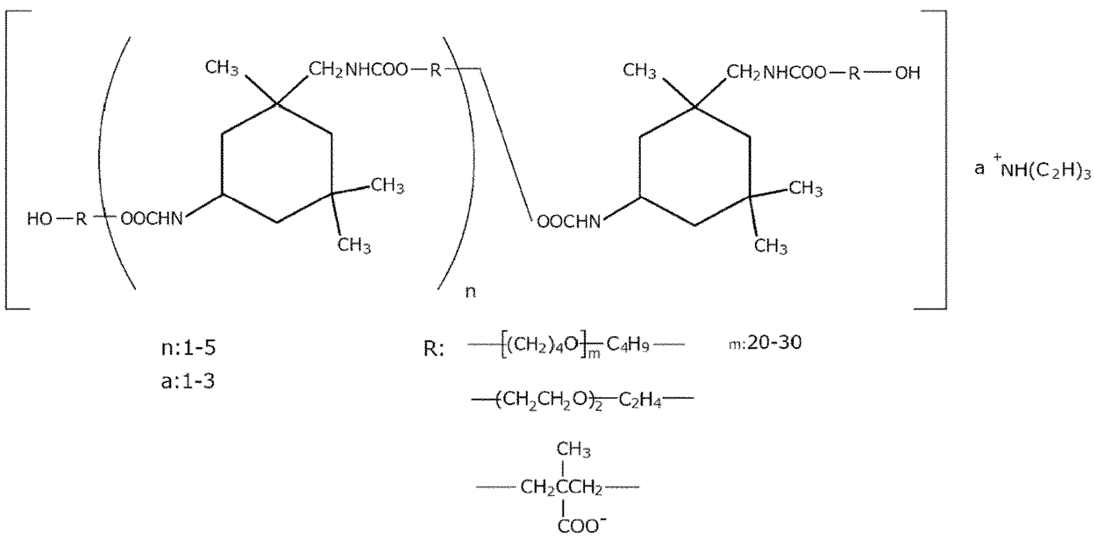

Chemical Formula 5.

**6.** The ink according to claim 5,
wherein the polyether-based urethane resin has an acid value of from 48 to 80 KOHmg/g.

**7.** The ink according to any one of claims 1 to 6,
wherein the coloring material comprises a pigment partially or entirely coated with a styrene-acrylic resin.

**8.** The ink according to any one of claims 1 to 7,
wherein a mass ratio of the resin to the coloring material is from 0.05 to 0.35.

**9.** An ink set comprising:

black ink comprising carbon black;
cyan ink comprising Pigment Blue 15:3;
magenta ink comprising Pigment Red 122; and
yellow ink comprising Pigment Yellow 74;
wherein each of the black ink, cyan ink, magenta ink, and yellow ink comprises:

a water-soluble organic solvent;
a compound represented by the following Chemical Formula 1 or Chemical Formula 2;
a surfactant comprising a first silicone-based compound having an HLB value of from 7.0 to 9.0 and a second silicone-based compound having an HLB value of from 14.0 to 18.0; and
water,

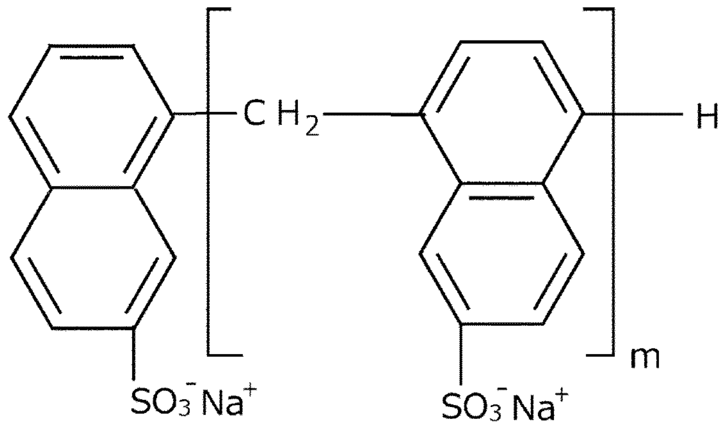

Chemical Formula 1

where m represents an integer of from 1 to 4,

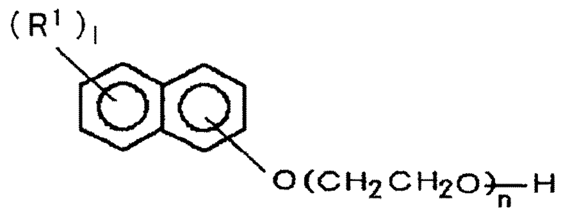

Chemical Formula 2

where $R^1$ represents an alkyl group having 1 to 20 carbon atoms, or an aralkyl group having 7 or 8 carbon atoms, l represents 0 or an integer of from 1 to 7, and n represents an integer of from 20 to 200.

**10.** The ink set according to claim 9,
wherein a surface tension of the black ink is at least 3 mN/m greater than a surface tension of each of the cyan ink, the magenta ink, and the yellow ink.

**11.** An inkjet printing device (101) comprising:

a container (135) accommodating the ink of any one of claims 1 to 8; and
an inkjet head (134) comprising:

a nozzle plate (10; 32) having a nozzle (11) through which the ink is discharged; and
an ink repulsion layer (31; 40) on an ink discharging surface of the nozzle plate, the ink repulsion layer (31;40) containing a silicon resin.

**12.** A printing method comprising:

applying the ink of any one of claims 1 to 8 to a substrate by an inkjet head including a nozzle through which the ink is discharged,
wherein the inkjet head includes a nozzle plate having the nozzle and an ink repulsion layer on the ink discharging surface of the nozzle plate, the ink repulsion layer containing a silicon resin.

**Patentansprüche**

**1.** Tinte, umfassend:

ein Farbmaterial;
ein wasserlösliches organisches Lösungsmittel;
eine Verbindung, die durch die folgende chemische Formel 1 oder chemische Formel 2 dargestellt wird;
ein Tensid, das eine erste Verbindung auf Silikonbasis, die einen HLB-Wert von 7,0 bis 9,0 aufweist, und eine zweite Verbindung auf Silikonbasis, die einen HLB-Wert von 14,0 bis 18,0 aufweist, umfasst; und
Wasser

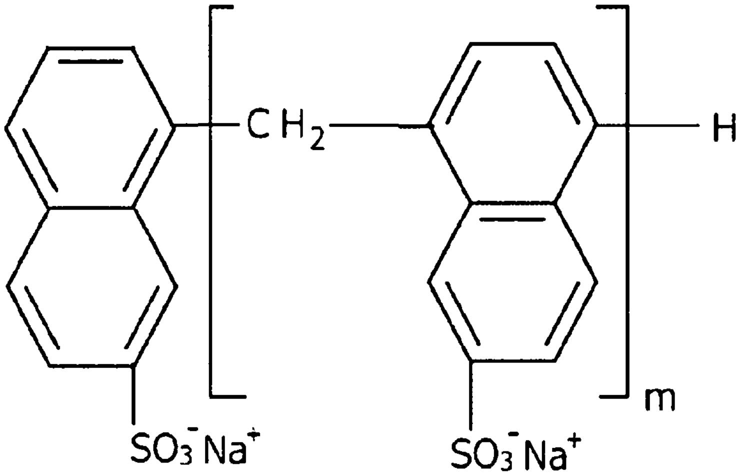

Chemische Formel 1

worin m eine ganze Zahl von 1 bis 4 darstellt,

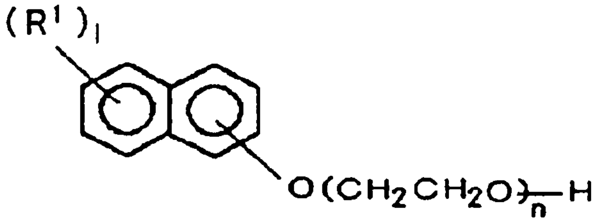

Chemische Formel 2

worin $R^1$ eine Alkylgruppe darstellt, die 1 bis 20 Kohlenstoffatome aufweist, oder eine Aralkylgruppe, die 7 oder 8 Kohlenstoffatome aufweist, l0 oder eine ganze Zahl von 1 bis 7 darstellt und n eine ganze Zahl von 20 bis 200 darstellt.

**2.** Tinte nach Anspruch 1,

wobei die erste Verbindung auf Silikonbasis durch die folgende chemische Formel 3 dargestellt wird,
wobei die zweite Verbindung auf Silikonbasis durch die folgende chemische Formel 4 dargestellt wird,

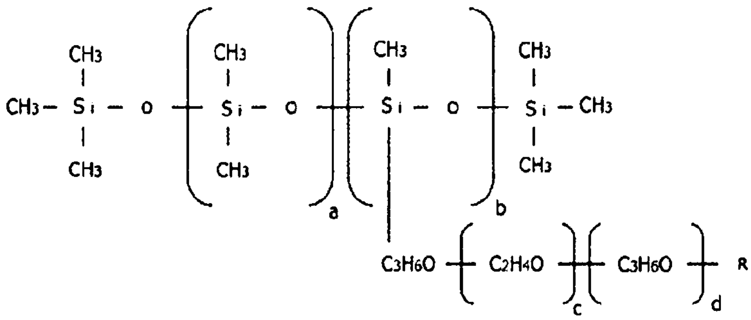

Chemische Formel 3

wobei in der chemischen Formel 3 a 0 oder eine ganze Zahl von 1 bis 23 darstellt, b eine ganze Zahl von 1 bis 10 darstellt, c eine ganze Zahl von 1 bis 23 darstellt, d 0 oder eine ganze Zahl von 1 bis 23 darstellt und R ein Wasserstoffatom oder eine Alkylgruppe darstellt, die 1 bis 4 Kohlenstoffatome aufweist.

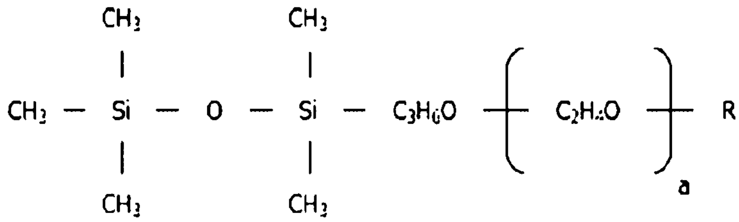

Chemische Formel 4

wobei in der chemischen Formel 4 a eine ganze Zahl von 1 bis 8 darstellt und R ein Wasserstoffatom oder eine Alkylgruppe darstellt, die 1 bis 4 Kohlenstoffatome aufweist.

**3.** Tinte nach Anspruch 1 oder 2,
wobei ein Massenverhältnis der ersten Verbindung auf Silikonbasis zur zweiten Verbindung auf Silikonbasis von 2:8 bis 4:6 beträgt.

**4.** 4. Tinte nach einem der Ansprüche 1 bis 3,
weiter umfassend eine Verbindung auf Acetylenbasis, die einen HLB-Wert von 3,0 bis 5,0 aufweist, oder 2,4,7,9-Tetramethyldecin-4,7-diol.

**5.** Tinte nach einem der Ansprüche 1 bis 4,
weiter umfassend ein Urethanharz auf Polyetherbasis, das durch die folgende chemische Formel 5 dargestellt wird,

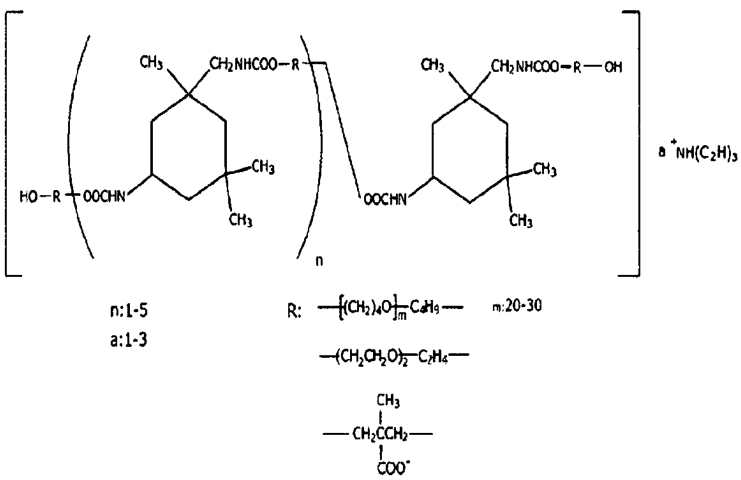

Chemische Formel 5

**6.** Tinte nach Anspruch 5,
wobei das Urethanharz auf Polyetherbasis einen Säurewert von 48 bis 80 KOH mg/g aufweist.

**7.** Tinte nach einem der Ansprüche 1 bis 6,
wobei das Farbmaterial ein Pigment umfasst, das teilweise oder vollständig mit einem Styrol-Acrylharz beschichtet ist.

**8.** Tinte nach einem der Ansprüche 1 bis 7,
wobei ein Massenverhältnis von Harz zu Farbmaterial von 0,05 bis 0,35 beträgt.

**9.** Tintensatz, umfassend:

schwarze Tinte, die Ruß umfasst;
Cyan-Tinte, die Pigment Blue 15:3 umfasst;
Magenta Tinte, die Pigmentrot 122 umfasst; und
gelbe Tinte, die Pigmentgelb 74 umfasst;
wobei jede der schwarzen Tinte, Cyan-Tinte, Magenta-Tinte und gelben Tinten umfasst:

wasserlösliches organisches Lösungsmittel;

eine Verbindung, die durch die folgende chemische Formel 1 oder chemische Formel 2 dargestellt wird; ein Tensid, das eine erste Verbindung auf Silikonbasis, die einen HLB-Wert von 7,0 bis 9,0 aufweist, und eine zweite Verbindung auf Silikonbasis, die einen HLB-Wert von 14,0 bis 18,0 aufweist, umfasst; und Wasser,

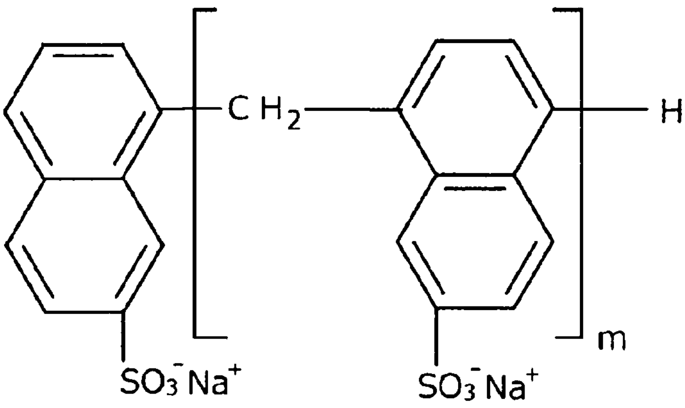

Chemische Formel 1

worin m eine ganze Zahl von 1 bis 4 darstellt,

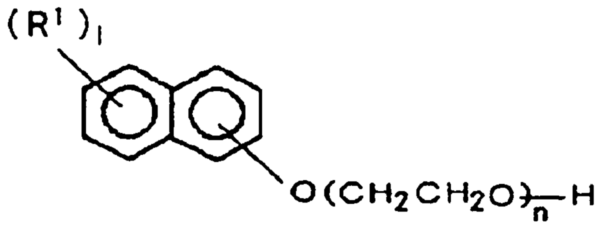

Chemische Formel 2

worin $R^1$ eine Alkylgruppe darstellt, die 1 bis 20 Kohlenstoffatome aufweist, oder eine Aralkylgruppe, die 7 oder 8 Kohlenstoffatome aufweist, l0 oder eine ganze Zahl von 1 bis 7 darstellt und n eine ganze Zahl von 20 bis 200 darstellt.

**10.** Tintensatz nach Anspruch 9, wobei die Oberflächenspannung der schwarzen Tinte mindestens 3 mN/m größer ist als die Oberflächenspannung der Cyan-Tinte, der Magenta-Tinte und der gelben Tinte.

**11.** Tintenstrahldruckvorrichtung (101), umfassend:

einen Behälter (135), der die Tinte nach einem der Ansprüche 1 bis 8 aufnimmt; und
einen Tintenstrahlkopf (134), umfassend:

eine Düsenplatte (10; 32), die eine Düse (11) aufweist, durch welche die Tinte abgegeben wird; und
eine Tintenabstoßungsschicht (31; 40) auf einer Tintenabgabefläche der Düsenplatte, wobei die Tintenabstoßungsschicht (31; 40) ein Silikonharz enthält.

**12.** Druckverfahren, umfassend:

Aufbringen der Tinte nach einem der Ansprüche 1 bis 8 auf ein Substrat durch einen Tintenstrahlkopf, der eine Düse einschließt, durch welche die Tinte abgegeben wird,
wobei der Tintenstrahlkopf eine Düsenplatte einschließt, welche die Düse und eine Tintenabstoßungsschicht auf der Tintenabgabefläche der Düsenplatte aufweist, wobei die Tintenabstoßungsschicht ein Silikonharz enthält.

## Revendications

**1.** Encre comprenant :

une matière colorante ;
un solvant organique soluble dans l'eau ;
un composé représenté par la Formule chimique 1 ou la Formule chimique 2 suivante ;
un tensioactif comprenant un premier composé à base de silicium présentant une valeur HLB de 7,0 à 9,0 et un second composé à base de silicium présentant une valeur HLB de 14,0 à 18,0 ; et
de l'eau

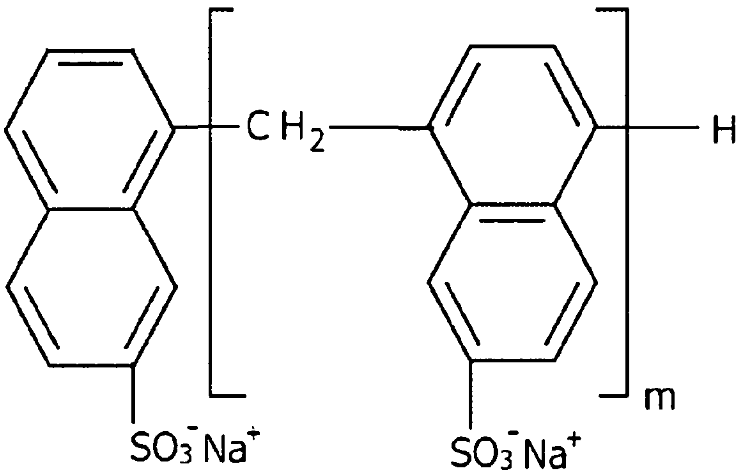

Formule chimique 1

où m représente un entier de 1 à 4,

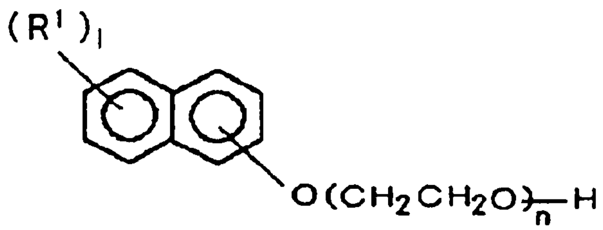

Formule chimique 2

où $R^1$ représente un groupe alkyle présentant de 1 à 20 atomes de carbone, ou un groupe aralkyle présentant 7 ou 8 atomes de carbone, l représente 0 ou un entier de 1 à 7, et n représente un entier de 20 à 200.

**2.** Encre selon la revendication 1,

dans laquelle le premier composé à base de silicium est représenté par la Formule chimique 3 suivante,
dans laquelle le second composé à base de silicium est représenté par la Formule chimique 4 suivante,

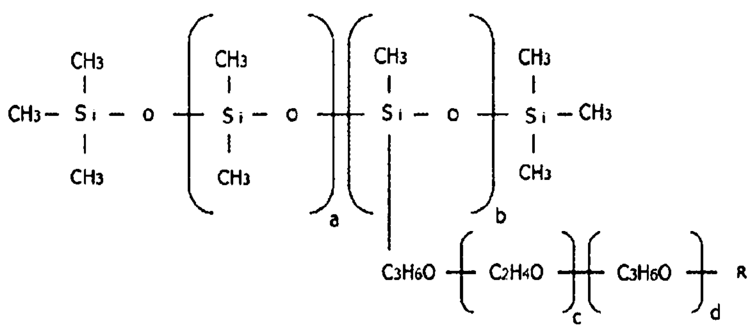

Formule chimique 3

où, dans la Formule chimique 3, a représente 0 ou un entier de 1 à 23, b représente un entier de 1 à 10, c représente un entier de 1 à 23, d représente 0 ou un entier de 1 à 23, et R représente un atome d'hydrogène ou un groupe alkyle présentant de 1 à 4 atomes de carbone.

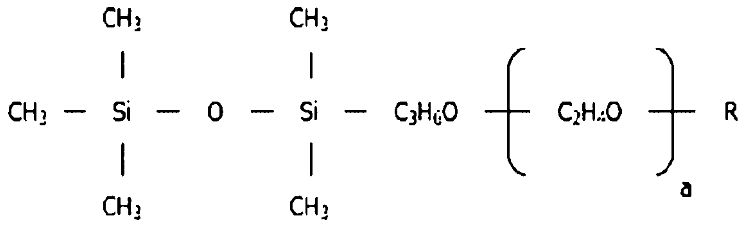

Formule chimique 4

où, dans la Formule chimique 4, a représente un entier de 1 à 8 et R représente un atome d'hydrogène ou un groupe alkyle présentant de 1 à 4 atomes de carbone.

**3.** Encre selon la revendication 1 ou 2,
dans lequel un rapport massique premier composé à base de silicium/second composé à base de silicium est de 2/8 à 4/6.

**4.** 4. Encre selon l'une quelconque des revendications 1 à 3,
comprenant en outre un composé à base d'acétylène présentant une valeur HLB de 3,0 à 5,0 ou 2,4,7,9-tétraméthyldécyne-4,7-diol.

**5.** Encre selon l'une quelconque des revendications 1 à 4,
comprenant en outre une résine d'uréthane à base de polyéther représentée par la Formule chimique 5 suivante,

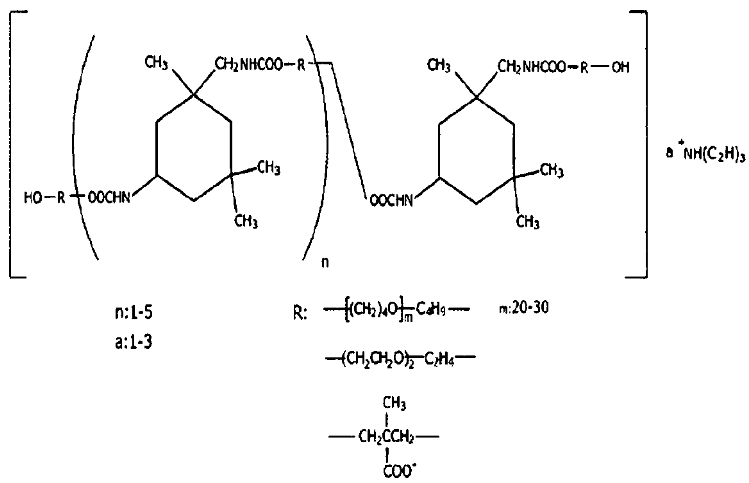

Formule chimique 5.

**6.** Encre selon la revendication 5,
dans laquelle la résine uréthane à base de polyéther présente une valeur d'acide de 48 à 80 KOHmg/g.

**7.** Encre selon l'une quelconque des revendications 1 à 6,
dans laquelle la matière colorante comprend un pigment partiellement ou entièrement revêtu d'une résine styrène-acrylique.

**8.** Encre selon l'une quelconque des revendications 1 à 7,
dans laquelle un rapport massique résine/matière colorante est de 0,05 à 0,35.

**9.** Ensemble d'encres comprenant :

de l'encre noire comprenant du noir de carbone ;
de l'encre cyan comprenant du pigment bleu 15/3 ;

de l'encre magenta comprenant du pigment rouge 122 ; et
de l'encre jaune comprenant du pigment jaune 74 ;
dans lequel chacune parmi l'encre noire, l'encre cyan, l'encre magenta et l'encre jaune comprend :

du solvant organique soluble dans l'eau ;
un composé représenté par la Formule chimique 1 ou la Formule chimique 2 suivante ;
un tensioactif comprenant un premier composé à base de silicium présentant une valeur HLB de 7,0 à 9,0 et un second composé à base de silicium présentant une valeur HLB de 14,0 à 18,0 ; et
de l'eau,

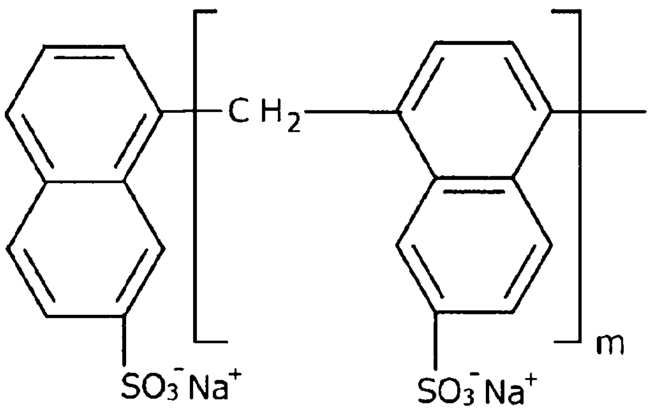

Formule chimique 1

où m représente un entier de 1 à 4,

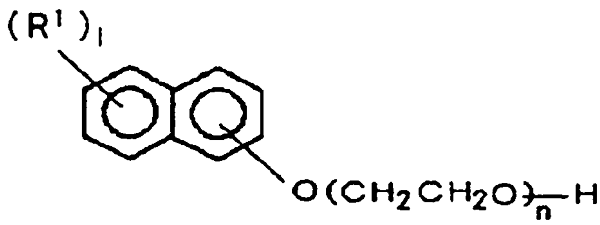

Formule chimique 2

où $R^1$ représente un groupe alkyle présentant de 1 à 20 atomes de carbone, ou un groupe aralkyle présentant 7 ou 8 atomes de carbone, l représente 0 ou un entier de 1 à 7, et n représente un entier de 20 à 200.

**10.** Ensemble d'encres selon la revendication 9,
dans lequel la tension superficielle de l'encre noire est d'au moins 3 mN/m supérieure à la tension superficielle de chacune parmi l'encre cyan, l'encre magenta et l'encre jaune.

**11.** Dispositif d'impression à jet d'encre (101) comprenant :

un conteneur (135) logeant l'encre selon l'une quelconque des revendications 1 à 8 ; et
une tête à jet d'encre (134) comprenant :

une plaque de buse (10 ; 32) présentant une buse (11) par l'intermédiaire de laquelle l'encre est déchargée ; et
une couche de répulsion d'encre (31 ; 40) sur une surface de décharge d'encre de la plaque de buse, la couche de répulsion d'encre (31 ; 40) contenant une résine de silicium.

**12.** Procédé d'impression comprenant :

l'application de l'encre selon l'une quelconque des revendications 1 à 8 sur un substrat par une tête à jet d'encre incluant une buse par l'intermédiaire de laquelle l'encre est déchargée,
dans lequel la tête à jet d'encre inclut une plaque de buse présentant la buse et une couche de répulsion d'encre

sur la surface de déchargé d'encre de la plaque de buse, la couche de répulsion d'encre contenant une résine de silicium.

FIG. 1

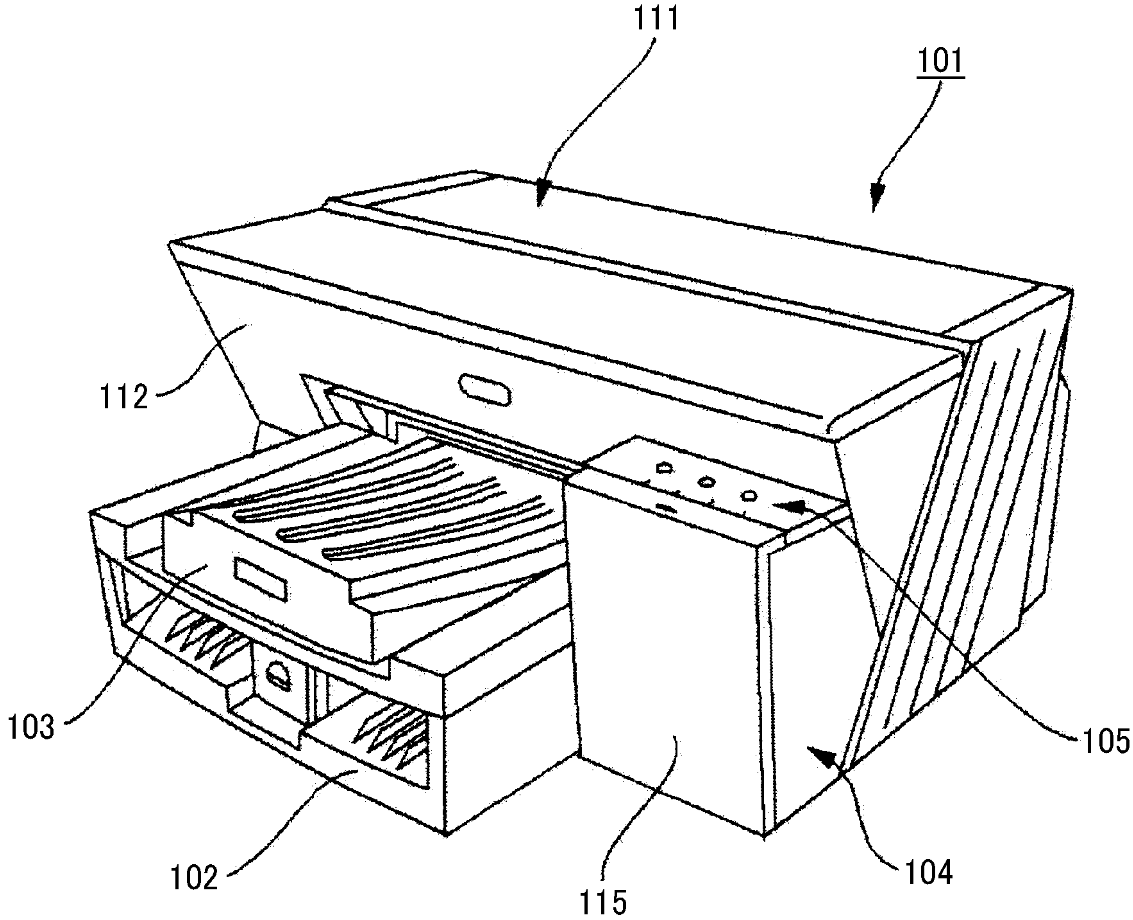

FIG. 2

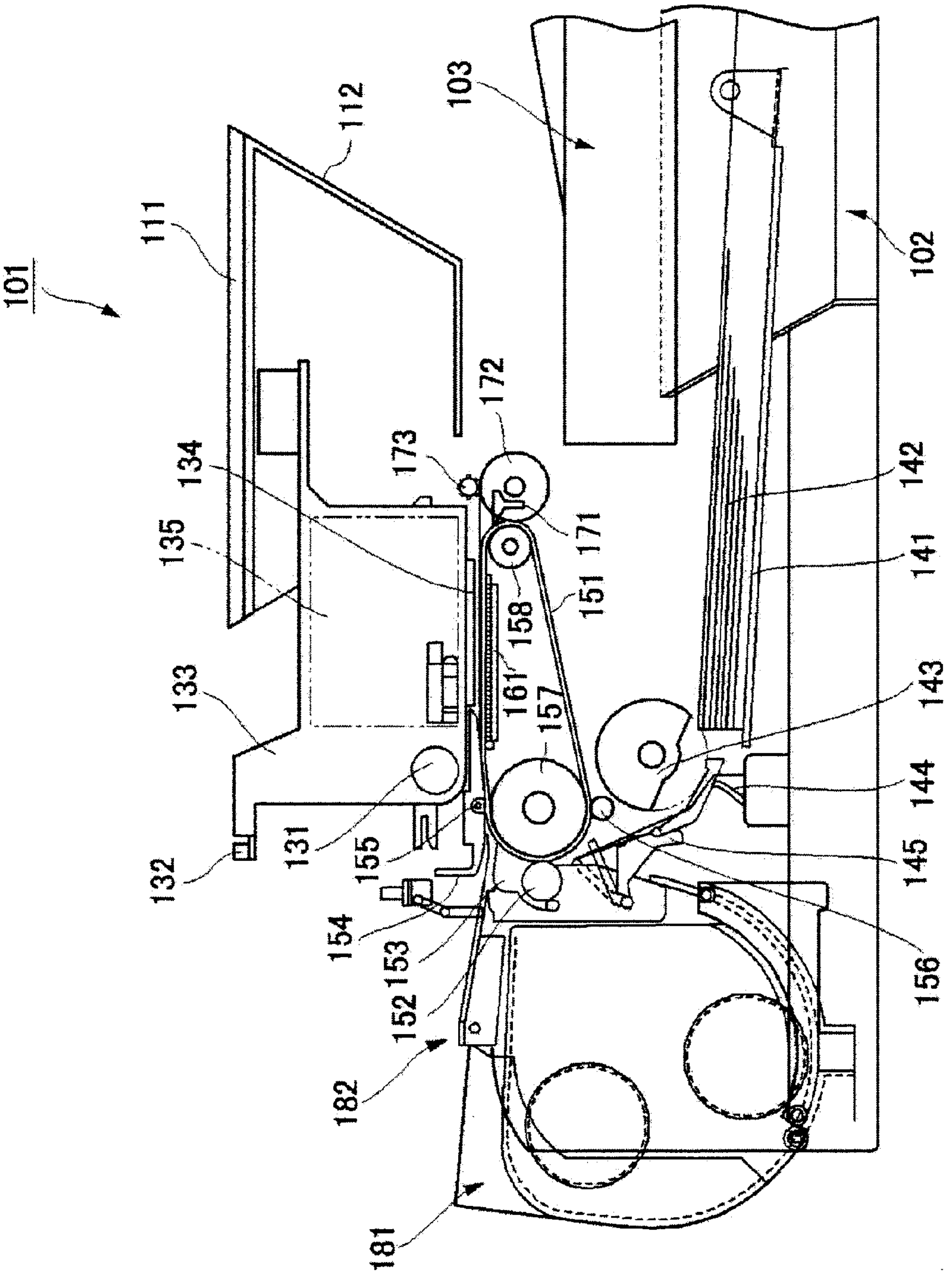
101
111
112
103
102
172
173
171
134
135
133
131
132
155
154
153
152
182
181
158
151
161
157
142
141
143
144
145
156

FIG. 3

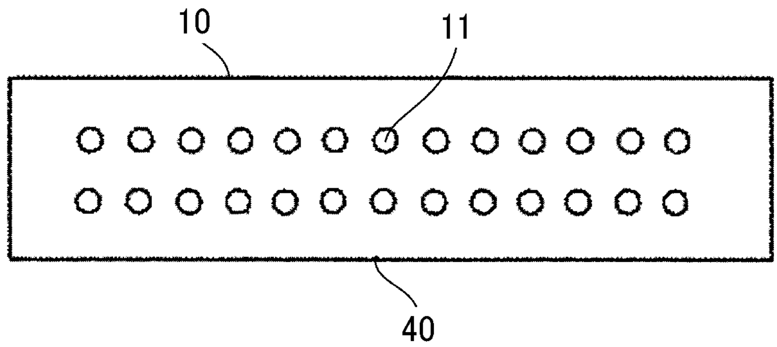


FIG. 4

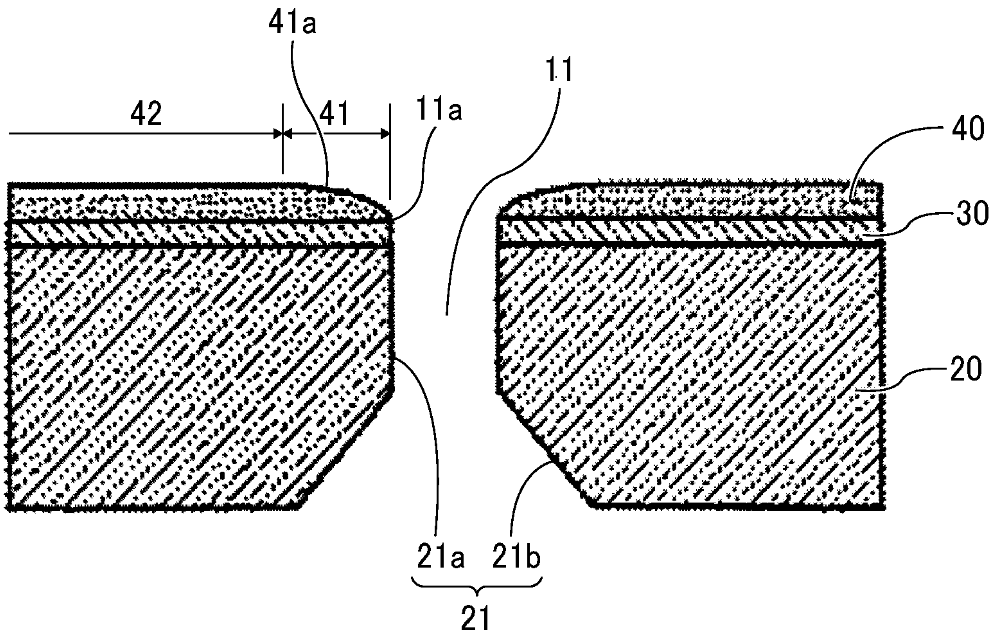

FIG. 5

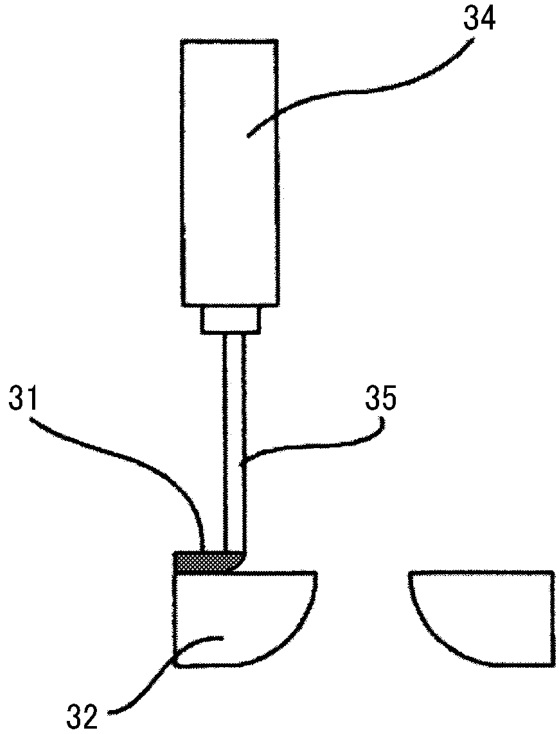

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016222754 A
- JP 2018115325 A
- JP 2013203910 A
- US 2013258007 A1
- US 2013063524 A1